**Europäisches Patentamt**

**European Patent Office**

**Office européen des brevets**

(19)

(11) Veröffentlichungsnummer: **0 207 113 B1**

# EUROPÄISCHE PATENTSCHRIFT

(12)

(45) Veröffentlichungstag der Patentschrift:
**12.06.91 Patentblatt 91/24**

(21) Anmeldenummer: **86900141.2**

(22) Anmeldetag: **20.12.85**

(86) Internationale Anmeldenummer:
**PCT/EP85/00725**

(87) Internationale Veröffentlichungsnummer:
**WO 86/03691 03.07.86 Gazette 86/14**

(51) Int. Cl.⁵: **B01J 8/14,** B01J 8/20,
B01J 10/00, B01J 14/00,
B01J 19/24, C12M 1/40,
// C02F3/28

(54) **VERFAHREN UND VORRICHTUNG ZUR STOFF- UND ENERGIEÜBERTRAGUNG IN FLUIDEN STOFFSYSTEMEN.**

(30) Priorität: **24.12.84 DE 3447412**

(43) Veröffentlichungstag der Anmeldung:
**07.01.87 Patentblatt 87/02**

(45) Bekanntmachung des Hinweises auf die
Patenterteilung:
**12.06.91 Patentblatt 91/24**

(84) Benannte Vertragsstaaten:
**AT BE CH DE FR GB IT LI LU NL SE**

(56) Entgegenhaltungen:
**WO-A-81/91251**
**DE-A- 2 355 106**

(56) Entgegenhaltungen:
**DE-B- 1 035 097**
**FR-A- 2 200 045**
**FR-A- 2 309 277**
**US-A- 3 330 046**

(73) Patentinhaber: **Blenke, Heinz, Prof. Dr.-Ing.**
**Bergwaldstrasse 40**
**W-7261 Gechingen (DE)**

(72) Erfinder: **Blenke, Heinz, Prof. Dr.-Ing.**
**Bergwaldstrasse 40**
**W-7261 Gechingen (DE)**

(74) Vertreter: **Münich, Wilhelm, Dr. et al**
**Kanzlei Münich, Steinmann, Schiller**
**Willibaldstrasse 36/38**
**W-8000 München 21 (DE)**

## Beschreibung

Die Erfindung betrifft ein Verfahren zur Stoff- und Energieübertragung in heterogenen Gas-Liquid-Systemen, wobei die Verweilzeiten der durchgesetzten Stoffströme innerhalb eines vorbestimmten Verweilzeitbereichs liegen, und bei dem sich das fluide Stoffsystem in mehreren, strömungsmäßig hintereinandergeschalteten und zu einer Kammerkaskade übereinander angeordneten Kammern befindet, in denen intern Umlaufströmungen erzeugt werden.

Außerdem betrifft die Erfindung eine Vorrichtung zur Stoff- und Energieübertragung in heterogenen Gas-Liquid-Systemen, wobei die Verweilzeiten der durchgesetzten Stoffströme innerhalb eines vorbestimmten Verweilzeitbereichs liegen, und bei dem sich das fluide Stoffsystem in mehreren, strömungsmäßig hintereinandergeschalteten und zu einer Kammerkaskade übereinander angeordneten Kammern befindet, wobei Strömungsleiteinrichtungen zum Erzeugen von internen Umlaufströmungen in den einzelnen Kammern vorgesehen sind.

Unter einem heterogenen Gas-Liquid-System soll hier nicht nur ein seiner Natur nach fluides Stoffsystem verstanden werden, wie beispielsweise ein Flüssigkeits-Flüssigkeits-System oder ein Flüssigkeits-Gas-System, sondern auch ein fluidisiertes Stoffsystem, das wenigstens einen Stoff enthält, der seiner Natur nach nichtfluid ist, jedoch durch Fluidisierung fluid gemacht worden ist, wie beispielsweise ein Feststoff, der durch Dispergierung in einer Flüssigkeit oder in einem Gas fluid gemacht worden ist.

Weiterhin ist hier unter eine Stoff- und Energieübertragung insbesondere auch eine Durchmischung von gleichphasigen oder verschiedenphasigen Stoffen zu verstehen, wobei diese Durchmischung sowohl eine homogene Durchmischung sein kann, wie beispielsweise die Durchmischung zweier ineinander löslicher Flüssigkeiten, als auch eine heterogene Durchmischung, wie beispielsweise die Dispergierung eines Gases in einer Flüssigkeit oder eines Feststoffs in einer Flüssigkeit oder einem Gas oder auch die Dispergierung von nicht miteinander mischbaren Flüssigkeiten ineinander unter Emulsionsbildung. Weitere Beispiele einer Stoff- und Energieübertragung sind Gaswäsche, Absorption, Extraktion, Kristallisation sowie chemische und biochemische Reaktionen.

Außerdem sei darau hingewiesen, daß der Begriff der Stoff- und Energieübertragung hier in dem Sinn verwendet wird, daß hierbei die Energieübertragung, die beispielsweise eine Wärmeübertragung sein kann, von untergeordneter Bedeutung sein kann oder daß umgekehrt auch die Stoffübertragung gegenüber der Energieübertragung von untergeordneter Bedeutung sein kann.

Besonders wichtig sind im Rahmen der vorliegenden Erfindung Gas-Flüssigkeits-Systeme, die in der Technik vielfältige Anwendungen finden, zum Beispiel bei Gaswäschen, Naßentstaubung, Trennung von Gasgemischen durch selektive Absorption, Verdampfung und Kondensation sowie bei chemischen und biochemischen Reaktionen. In den meisten Fällen ist die Gasphase hierbei selbst an den erwähnten Vorgängen durch Stoff- und Energieübertragung zwischen der Gasphase und der Flüssigkeitsphase beteiligt. Die Gasphase kann aber auch als "Inertgas" lediglich zur Durchmischung des Flüssigkeitssystems benutzt werden, während der eigentliche Vorgang, wie er beispielsweise vorstehend angegeben ist, allein in der Flüssigkeitsphase stattfinden kann, wie beispielsweise bei der Solventextraktion oder der Kristallisation.

Unter einem Gas-Flüssigkeits-System sollen hier unter anderem auch solche Gas-Flüssigkeits-Systeme verstanden werden, die außer reinen oder moleculardurchmischten Gas- und Flüssigkeitsphasen auch unlösliche dispergierte Flüssigkeits- und/oder Feststoffphasen enthalten, wie beispielsweise Aerosole, Emulsionen oder Suspensionen.

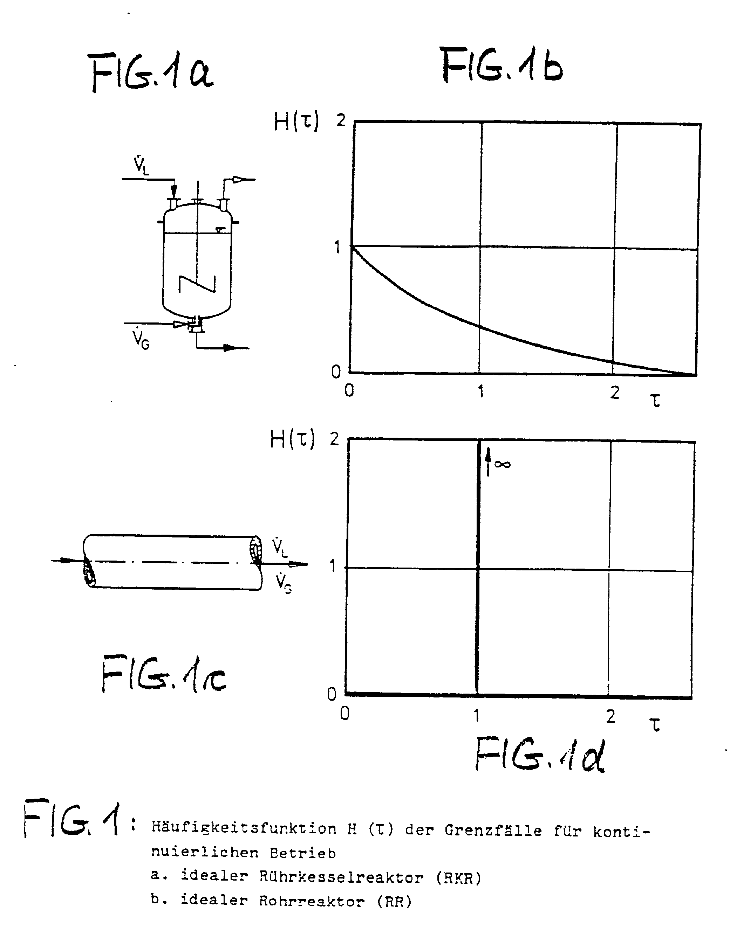

Es seien zunächst anhand der Figuren 1a bis 1d die beiden grundsätzlichen verfahrenstechnischen Möglichkeiten erörtert, die nach dem Stande der Technik zur Verfügung stehen, um eine Stoff- und Energieübertragung in fluiden Stoffsystemen zu bewirken, wobei es sich um zwei Grenzfälle von Idealapparaten handelt, nämlich dem sogenannten idealen Rührkesselreaktor, wie er schematisch in Figur 1a dargestellt ist, und den sogenannten idealen Rohrreaktor, wie er schematisch in Figur 1c veranschaulicht ist, wobei der Begriff "Reaktor" hier jede mögliche verfahrenstechnische Verwendung beinhaltet.

Der Rührkesselreaktor besteht im wesentlichen aus einem relativ großen Volumen, das zum Zwecke der Durchmischung mit einer Rühreinrichtung versehen ist und in dem sich ein fluides Stoffsystem befindet. Wenn dieses Stoffsystem beispielsweise ein Gas-Flüssigkeits-System ist, dann wird zum Beispiel der zuzuführende Gasstrom $\dot{V}_G$ unten in den Rührkesselreaktor eingeleitet und abzuführendes Gas oben aus dem Rührkesselreaktor abgeführt, wie durch die hellen Pfeile in Figur 1a veranschaulicht, während der zuzuführende Flüssigkeitsstrom $\dot{V}_L$ zum Beispiel oben in den Rührkesselreaktor eingeleitet und abzuführende Flüssigkeit unten aus dem Rührkesselreaktor entnommen wird, wie durch die dunklen Pfeile angedeutet.

Der ideale Rührkesselreaktor hat den Vorteil, daß eine intensiver stoff- und Wärmeübertragung zwischen den Stoffphasen im Rührkesselreaktor stattfindet, also insbesondere eine intensive Durchmischung, Dispergierung, Fluidisierung etc. Nachteilig an dem idealen Rührkesselreaktor ist es vor allem, daß die einzelnen Teilmengen der Stoffe, die das fluide Stoffsystem im Rührkesselreaktor durchströmen, ganz erzeblich unterschiedliche Verweilzeiten haben, die im Grenzfall zwischen Null und Unendlich liegen. Das veranschaulicht die Figur 1b, in welcher die Häufigkeitsfunktion H($\tau$) über den relativen Verweilzeiten $\tau$ aufgetragen ist, welche die individuelle Verweilzeit t jeder Teilmenge auf die mittlere Verweilzeit $\bar{t}$ aller Teilmengen beziehen gemäß $\tau = t/\bar{t}$. Diese Häufigkeitsfunktion gibt an, welche Teilmenge des bei $\tau = 0$ stoßartig dem Flüssigkeitsstrom $\dot{V}_L$ zugesetzte Markierungssubstanz bei $\tau$ in einem infinitesimalen Intervall d$\tau$ aus dem Rührkesselreaktor austritt, also die relative Verweilzeit $\tau$ hat.
Wie man aus Figur 1b ersieht, ergeben sich die unterschiedlichsten Verweilzeiten, wobei zu beachten ist, daß sich die Kurve H($\tau$) in Figur 1b mit wachsenden $\tau$-Werten tatsächlich der Abszisse nur asymptotisch nähert, also alle Verweilzeiten bis Unendlich möglich sind.

Diese außerordentlich unterschiedlichen Verweilzeiten der einzelnen Teilmengen der zugeführten Stoffe führen bei allen zeitabhängigen Vorgängen, zum Beispiel bei chemischen und biochemischen Reaktionen, zu einer Uneinheitlichkeit der Teilmengen der aus dem Rührkesselreaktor austretenden Stoffe, beispielsweise hinsichtlich ihrer stofflichen Konzentrationen. Bei der im idealen Rührkesselreaktor vorhandenen vollkommenen Durchmischung ergibt sich im Rührkesselreaktor die gleiche mittlere Konzentration der einzelnen Stoffkomponenten wie am Ausgang des Rührkesselreaktors. Aufgrund dieser Verhältnisse werden die Reaktionen verzögert, und der mittlere chemische oder Biochemische Umsatz wird nachteiligerweise Begrenzt.

Der bezüglich des idealen Rührkesselreaktors entgegengesetzte Extremfall ist der in Figur 1c schematisch dargestellte ideale Rohrreaktor, der durch eine Pfropfenströmung der durchlaufenden Stoffe, zum Beispiel des Flüssigkeitsstroms $\dot{V}_L$ und des Gasstroms $\dot{V}_G$ eines Gas-Flüssigkeits-Systems charakterisiert ist. Hier haben alle Teilmengen der durchströmenden Stoffe die gleiche Verweilzeit. Das hat den Vorteil, daß sich für alle zeit-abhängigen Vorgänge eine vollkommene Einheitlichkeit aller Teilmengen, beispielsweise hinsichtlich ihrer Konzentration,an den beteiligten Stoffen ergibt. Auf diese Weise wird ein gleichmäßiger Umsatz aller am Verfahren beteiligten Stoffe erzielt, und zwar von ihren Eintrittskonzentrationen bis hin zu ihren Austrittskonzentrationen, die sich aus der Kinetik und der Verweilzeit ergeben und beträchtlich günstiger als bei den jeweils mittleren Konzentrationen im Rührkesselreaktor sind. Insbesondere wird ein Reaktionsprodukt größtmöglicher Einheitlichkeit erhalten. Der ideale Rohrreaktor hat insbesondere den Nachteil, daß er die geringstmögliche Stoff- und Energieübertragung zwischen den beteiligten Stoffen hat, da keine Durchmischung Dispergierung und Fluidisierung im idealen Rohrreaktor erfolgt, also eine Stoff- und Energieübertragung nur durch Diffusion möglich ist.

Die einheitliche, für alle beteiligten Stoffe gleiche Verweilzeit im idealen Rohrreaktor ist in Figur 1d bei $\tau = 1$ veranschaulicht.

Durch eine Reihenschaltung von mehreren Rührkesselreaktoren zu einer sogenannten Rührkesselkaskade, wie sie in Figur 2a angedeutet ist, lassen sich die Vorteile des Rührkesselreaktors mit denjenigen des Rohrreaktors vereinigen. Es ergibt sich so eine größtmögliche Stoff- und Energieübertragung bei Verweilzeiten, die innerhalb begrenzter Verweilzeitbereiche liegen, die um so kleiner sind, je größer die Anzahl n der hintereinandergeschalteten Rührkesselreaktoren ist. In Figur 2b ist die Häufigkeitsfunktion H($\tau$) für drei verschiedene Rührkesselkaskaden dargestellt, bei denen die Anzahl n der hintereinandergeschalteten Rührkesselreaktoren 2, 10 und 33 beträgt. Man sieht aus Figur 2b, daß das Verweilzeitspektrum sich mit steigender Anzahl n der hintereinandergeschalteten Rührkesselreaktoren sehr stark verengt.

Nachteilig an Rührkesselkaskaden ist, daß sie einen hohen bis unvertretbaren Bau- und Betriebskostenaufwand erfordern, sofern sie aus der zur Erzielung eines einigermaßen engen Verweilzeitspektrums erforderlichen Anzahl von 10 und mehr Rührkesseln bestehen.

Es besteht daher ein Bedürfnis nach einer gegenüber der Verfahrensweise und dem Aufbau der Rührkesselkaskade im Bau- und Betriebskostenaufwand wesentlich günstigeren Verfahrensweise und Vorrichtung zum Bewirken eines Stoff- und Energieaustauschs zwischen einem fluiden Stoff- system und einem demselben zugeführten Stoff, bei dem die Verweilzeiten der einzelnen Teilmengen des dem Stoffsystem zugeführten Stoffes innerhalb eines vorbestimmten, beschränkten Verweilzeitbereichs liegen.

Ein solches Verfahren und eine solche Vorrichtung, die von der eingangs genannten Art sind, jedoch nur eine sehr beschränkte Anwendbarkeit haben, sind aus dem Artikel "Mehrstufige selbstfluidisierende Wirbelzellenkolonne" von G. Schreiber aus der Zeitschrift "Die chemische Produktion" 9. Jahrgang (1980), Heft 9, Seite 3 bis 12 oder aus der DE-A'2355106 bekannt. Dieses bekannte Verfahren und diese bekannte Vorrichtung sind nur bei fluiden Stoffsystemen anwendbar, die entweder aus reinen Flüssigkeiten bestehen, wobei eine Entmischbarkeit dieser Flüssigkeiten gegeben sein muß, oder aus Suspensionen. In diesem Verfahren und in dieser Vorrichtung ist das jeweilige Flüssigkeitssystem oder Flüssigkeits-Feststoff-System in mehreren, strömungsmäßig hintereinandergeschalteten und zu einer Wirbelkaskade übereinander angeordneten Kammern untergebracht, und in den einzelnen Kammern wird durch herabsinkende schwerere Stoffe, insbesondere durch Partikel einer Suspension, eine Wirbelströmung bewirkt. Die Energie zum Erzeugen der Wirbelströmung wird ausschließlich durch die Bewegungsenergie der sich nach abwärts bewegenden schwereren Stoffe aufgebracht, und zwar im wesentlichen direkt sowie in einem Beispielsfall zu einem geringen Anteil dadurch, daß der herabsinkende schwerere Stoff einen geringen Anteil einer leichteren Flüssigkeit um einen relativ kleinen Steigbetrag nach oben drückt. In jedem Falle muß die schwerere Stoffphase immer von oben nach unten geleitet werden, weil es genau diese schwerere Stoffphase ist, welche, wie erwähnt, die Energie zum Erzeugen der Wirbelströmung liefert.

Abgesehen von der nur sehr beschränkten Anwendbarkeit dieser bekannten Wirbelzellenkolonne auf Flüssigkeits-Systeme und Flüssigkeits-Feststoff-Systeme ergeben sich in den meisten Fällen wegen der relativ großen Sinkgeschwindigkeiten der beteiligten Flüssigkeiten und Feststoffe zwangsweise verhältnismäßig hohe, in vielen Fällen nicht erwünschte, Durchsatzgeschwindigkeiten, wenn man eine für eine gute Stoff- und Energieübertragung genügend starke Wirbelströmung in den Kammern erzeugen will. Um die Reaktionszeiten, insbesondere bei langsam ablaufenden chemischen und biochemischen Reaktionen zu verlängern, kann man zwar die Bauhöhen derartiger Wirbelzellenkolonnen vergrößern, aber einerseits sind die maximal erreichbaren Bauhöhen beschränkt und andererseits ergibt sich dadurch ein verhältnismäßig hoher baulicher Aufwand.

Mit der vorliegenden Erfindung sollen ein Verfahren und eine Vorrichtung der eingangs genannten Art zur Stoff- und Energieübertragung in fluiden Stoffsystemen, wobei die Verweilzeiten der durchgesetzten Stoffströme innerhalb eines vorbestimmten Verweilzeitbereichs liegen, zur Verfügung gestellt werden, die in wesentlich weiterem Umfang, insbesondere auch für gashaltige Stoffsysteme, anwendbar und betriebsgünstiger sind.

Dieses Ziel wird mit einem Verfahren der eingangs genannten Art erfindungsgemäß dadurch erreicht, daß die internen Umlaufströmungen ausschließlich oder hauptsächlich durch wenigstens einen Stoff erzeugt werden, der aufgrund seines Auftriebs in dem fluiden Stoffsystem aufsteigt oder durch mindestens einen Stoffstrom, der lokal in wenigstens einer Kammer injiziert wird.

Dieses Verfahren ist in vorteilhafter Weise auf praktisch alle überhaupt in Frage kommenden fluiden, also auch fluidisierten, Ein- und Mehrphasenstoffsysteme anwendbar und in verhältnismäßig einfacher Weise so steuerbar, daß bei relativ beschränktem Bau- und Betriebskostenaufwand ein weiter Bereich von Durchsatzgeschwindigkeiten, die den jeweiligen Erfordernissen des Stoff- und Energieaustauschs, beispielsweise einer chemischen oder biochemischen Reaktion, optimal angepaßt sind, zur Verfügung steht.

Die mit der Erfindung vorgeschlagene Vorrichtung zum Durchführen des Verfahrens nach der Erfindung, welche den eingangs genannten grundsätzlichen Aufbau hat, zeichnet sich erfindungsgemäß dadurch aus, daß die Strömungsleiteinrichtungen schräg nach oben gerichtete und zu den die Kammern für den hauptsächlichen Stoffdurchsatz durch die Kammerkaskade verbindenden Strömungsdurchtrittsöffnungen verlaufende Strömungsleitflächen sind.

Diese vorstehend genannten Strömungsleitflächen führen den die interne Wirbelumlaufströmung erzeugenden Stoff zu der jeweils nächsthöherliegenden Kammer, und zwar jeweils zu der Durchtrittsöffnung, durch welche das in den Kammern befindliche fluide Stoffsystem einschließlich des diesem zur Stoff- und Energieübertragung zugeführten Stoffs von jeweils einer Kammer zur nächsten Kammer strömt.

Auf diese Weise ergibt sich ein verhältnismäßig einfacher und trotzdem sehr wirkungsvoller Aufbau der erfindungsgemäßen Vorrichtungen. Durch die leicht und definiert einstellbare Antriebsleistung der eingedüsten Stoffströme oder der längs der schräg nach oben gerichteten Strömungsleitflächen aufsteigenden leichten Stoffphase sowie noch andere bauliche und verfahrensmäßige Parameter, auf die weiter unten noch näher eingegangen wird, läßt sich die Stärke der Umlaufströmungen in einem weiten Bereich steuern.

Durch das erfindungsgemäße Verfahren und die Vorrichtung nach der Erfindung werden eine definierte Annäherung des Verweilzeitverhaltens aller Stoffphasen an das Verweilzeitverhalten des idealen Rohrreaktors und damit insbesondere eine Verbesserung des Umsatzes und eine hohe Einheitlichkeit des Umsatzes bei verfahrenstechnischen Vorgängen durch eine mehr- bzw. vielstufige Kammerkaskade erreicht, die sich auch mit einem großen Volumen und vielen Stufen, d.h. Kammern, technisch-wirtschaftlich günstig verwirklichen läßt.

Weiterhin ist durch eine Kombination des erfindungsgemäßen Verfahrens und der Vorrichtung nach der Erfindung mit anderen Reaktortypen und verfahrensmäßigen Vorrichtungen eine gezielte optimale Anpassung des Verfahrens und der Vorrichtung nach der Erfindung an verschiedenartige Anforderungen von Verfahrensabschnitten unterschiedlicher Prozesse erzielbar. Hierbei kann die erfindungsgemäße Vorrichtung mit anderen Reaktortypen, Apparaten oder verfahrensmäßigen Vorrichtungen in einem einzigen Gesamtapparat oder in miteinander verbundenen Einzelapparaten oder -aggregaten kombiniert werden.

Eine besonders bevorzugte Ausführungsform der Erfindung zeichnet sich dadurch aus, daß man als Stoff zum Erzeugen einer internen Umlaufströmung ein Gas verwendet. Dieses Gas kann ein inertes, also an den sonstigen Vorgängen, wie beispielsweise chemischen oder biochemischen Reaktionen, im fluiden Stoffsystem nichtbeteiligtes Gas sein, oder das Gas kann, was besonders vorteilhaft ist, als Reaktionsprodukt in den Kammern der Kammerkaskade entstehen, oder es kann ein Stoff sein, der dem fluiden Stoffsystem sowieso zur Durchführung des betreffenden Verfahrens zugeführt werden muß. In diesem Zusammenhang sei darauf hingewiesen, daß unter einem dem fluiden Stoffsystem zum Zwecke der Stoffund Energieübertragung zugeführten Stoff im Sinne der Erfindung auch mehrere einzelne Stoffe, zum Beispiel ein Gas und eine Flüssigkeit, verstanden werden können.

Ganz allgemein kann das die interne Umlaufströmung erzeugende Gas ein bezüglich der sonstigen Verfahrensvorgänge in der Kammerkaskade inerter Stoff oder an dem Verfahren in dem fluiden Stoffsystem beteiligter, entstehender oder verbrauchter Stoff sein.

Wenn der die interne Umlaufströmung erzeugende, aufsteigende, leichtere Stroffstrom, insbesondere Gas, von außen zugeführt wird, dann erfolgt das vorteilhafterweise in der untersten Kammer der Kammerkaskade. Abgeführt wird der leichtere Stoff vorteilhafterweise aus der obersten Kammer, sofern er nicht innerhalb der Kammern mit einem oder mehreren anderen Stoffen des fluiden Stoffsystems reagiert oder in sonstiger Weise davon gebunden wird, beispielsweise durch Absorption und/oder biologische und/oder chemische Reaktionen.

In vielen Fällen ist es aber möglich, daß man den die interne Umlaufströmung erzeugenden Stoff, insbesondere ein Gas, ganz oder zusätzlich im Kreislauf durch die Kammerkaskade führt. Das empfiehlt sich vor allem dann, wenn ein bezüglich der sonstigen Vorgänge in dem fluiden Stoffsystem inerter Stoff zum Erzeugen der internen Umlaufströmung in den Kammern, beispielsweise ein inertes Gas, verwendet wird.

Bevorzugt werden koaleszierte oder agglomerierte Stoffe im fluiden Stoffsystem redispergiert, wodurch insbesondere der Stoffumsatz gefördert wird.

Weiterhin kann es günstig sein, wenn in der Kammerkaskade durch Einbauten, vorzugsweise Strömungsleiteinrichtungen, verfahrensfördernde Stoffe zugeführt und/oder verfahrenshemmende Stoffe abgeführt und/oder biologische oder chemische Katalysatoren fixiert und/oder dem Stoffsystem zusätzlich Wärme zugeführt oder entzogen wird.

Auch kann es vorteilhaft sein, das Verfahren so durchzuführen, daß man dem in der Kammerkaskade durchzuführenden Verfahren einen den aufsteigenden Stoff erzeugenden Verfahrensschritt vorschaltet.

Schließlich ist es möglich, daß mittels der Umlaufströmungen in den Kammern Wirbelschichten aus Partikeln, die als Katalysatoren, Reaktionspartner oder als Träger zur Fixierung von chemischen oder biologischen Katalysatoren verwendet werden, erzeugt werden, wobei die Partikel durch die Kammerkaskade durchlaufen gelassen oder in den Kammern austauschbar zurückgehalten werden.

Die in der Vorrichtung nach der Erfindung vorgesehenen Strömungsleitflächen zum Erzeugen einer internen Umlaufströmung in den einzelnen Kammern können eben, bogenförmig verlaufend oder konisch ausgebildet sein.

Die Strömungsdurchtrittsöffnungen, durch welche der die Umlaufströmung antreibende Stoff in die nächsthöhere Kammer steigt und durch welche gleichzeitig der hauptsächliche Stoffdurchsatz der Kammerkaskade hindurchströmt, können vertikal fluchtend angeordnet oder horizontal gegeneinander versetzt sein, wobei sie in jedem Falle so angeordnet sind, daß die erwähnte Umlaufströmung durch das Aufsteigen des leichteren Stoffes oder die Injektion fluider Stoffströme in den einzelnen Kammern der Kammerkaskade erzeugt wird.

Eine Weiterbildung der erfindungsgemäßen Vorrichtung zeichnet sich dadurch aus, daß innerhalb der Kammern zusätzliche Strömungsleitflächen vorgesehen sind. Diese zusätzlichen Strömungsleitflächen können vertikale Leitflächen, insbesondere vom Platten- oder Rohrtyp sein, welche die Umlaufströmung definiert, insbesondere im Sinner einer Schlaufenströmung innerhalb der Kammern, lenken. As zusätzliche Strömungsleitflächen können auch solche Leitflächen, insbesondere in Form von Sieben oder perforierten Lenkflächen, verwendet werden, welche die Führung des die Umlaufströmung bewirkenden Stoffes in die Strömungsdurchtrittsöffnung zur nächsthöheren Kammer verbessern und das Hineinziehen des die Umlaufströmung bewirkenden Stoffes, beispielsweise von Gasblasen, in die Umlaufströmung mindern. In den Strömungsdurchtrittsöffnungen können Siebe oder Lochplatten oder sonstige selektive Sperrvorrichtungen vorgesehen sein, durch die suspendierte Ferstoffe, wie beispielsweise Katalysatoren, Adsorbentien oder Partikel mit fixierten Zellen oder Enzymen in den einzelnen Kammern zurückgehalten werden. Diese Siebe, Lochplatten oder sonstigen selektiven Sperrvorrichtungen können außerdem zur Redispergierung koaleszierter Gasblasen und Tropfen sowie agglomerierter Partikel beitragen.

Als Stoff zum Erzeugen der Umlaufströmung können auch Auftriebskörper vorgesehen sein, zum Beispiel Kapseln, in denen Gas eingeschlossen ist, welche der Kammerkaskade unten, vorzugsweise der untersten Kammer, über eine Zuführungsvorrichtung zugeführt und der Kammerkaskade oben, vorzugsweise der obersten Kammer, über eine Abführungsvorrichtung entnommen werden, wobei zwischen beiden eine Rückführeinrichtung zur Rezirkulation der Auftriebskörper vorgesehen sein kann. Diese Rückführeinrichtung kann beispielsweise eine Pumpe sein, welche die Auftriebskörper nicht beschädigt, zum Beispiel eine Schnecken- oder Mohnopumpe, auch Moineaupumpe genannt.

Die mit dem fluiden Stoffsystem in Strömungskontakt befindlichen Bauteile, wie beispielsweise die zu den Strömungsdurchtrittsöffnungen verlaufenden Strömungsleitflächen, die zusätzlichen Strömungsleitflächen oder Kammerwände oder sonstige Kammereinbauten können doppelwandig ausgebildet und mit einer Zu- und/oder Abführungsysvorrichtung für Stoffe versehen sein. Auf diese Weise kann in die doppelwandigen Bauteile ein fluides Heiz- oder Kühlmittel zum Erwärmen oder Kühlen des fluiden Stoffsystems, das sich in den Kammern der Kammerkaskade befindet, zu- und abgeführt werden. Es ist auch möglich, daß im Falle dieser doppelwandigen Ausbildung die Zu- oder Abführungsvorrichtung im Strömungskontaktbereich mit dem fluiden Stoffsystem vorgesehen ist, und insbesondere kann die Zu- oder Abführungsvorrichtung als Doppelmembran oder als Membranträger oder als perforierte Wand ausgebildet sein, so daß mit einer solchen selektiven Zu- oder Abführungsvorrichtung Stoffe, wie beispielsweise Substrate für Bioreaktionen in die Kammern zugeführt oder selektiv Stoffe, die zum Beispiel zur Produktinhibierung führen, wie EtOH bei alkoholischer Gärung, aus den Kammern abgeführt werden können. Die erwähnten eventuellen zusätzlichen Einbauten und die verschiedenen möglichen Strömungsleitflächen können auch zur Katalysator-, Zell- und Enzymfixierung an ihren mit dem fluiden Stoffsystem in Kontakt befindlichen Oberflächen dienen. Dafür lassen sich vorteilhafterweise auch Partikel verwenden, die als Festbetten in zwangsdurchströmten Teilräumen der Kammern angeordnet werden oder die von der Umlaufströmung als Wirbelschicht fluidisiert werden.

Schließlich ist es möglich, daß der Kammerkaskade eine Misch- und/oder Rekatoreinrichtung, welche den die Umlaufströmung bewirkenden Stoff zuführt und/oder erzeugt, vorgeschaltet ist, und eine solche Misch- und/oder Reaktoreinrichtung kann beispielsweise ein Schlaufenreaktor sein.

Endlich können mehrere Kammerkaskaden baulich zu einer Kaskadeneinheit vereinigt sein. Hierbei können die einzelnen Kammerkaskaden konzentrisch umeinander oder auch nebeneinander angeordnet sein. Insbesondere ist es möglich, daß eine solche Kaskadeneinheit eine den gemeinsamen Druck der fluiden Stoffsysteme in den einzelnen Kammerkaskaden aufnehmende Außenwand aufweist, während die im Inneren der Kaskadeneinheit befindlichen Trennwände, die benachbarten Kammerkaskaden gemeinsam sind, weniger druckfest als die Außenwand ausgebildet sein können, weil sie, wenn die einzelnen Kammern gleichzeitig und in gleichem Maße gefüllt sind, nur geringe Differenzdrücke aufzunehmen brauchen, so daß nur die Außenwand den eigentlichen seitlichen Druck des fluiden Stoffsystems aufnehmen muß.

Die Erfindung sei nachstehend anhand einiger in den Figuren 3 bis 9 der Zeichnung dargestellter, besonders bevorzugter Ausführungsformen näher erläutert, auf welche die Erfindung jedoch in keiner Weise beschränkt ist ; es zeigen :

Figur 1a einen Rührkesselreaktor nach dem Stande der Technik ;

Figur 1b eine Kurvendarstellung, welche das Verweilzeitverhalten der dem Rührkesselreaktor nach Figur 1a zugeführten Teilstoffmengen veranschaulicht ;

Figur 1c einen Ausschnitt aus einen Rohrreaktor;

Figur 1d eine Kurvendarstellung, die das Verweilzeitverhalten der dem Rohrreaktor nach Figur 1c zugeführten Teilstoffmengen veranschaulicht ;

Figur 2a eine Rührkesselkaskade, die durch Hintereinanderschalten von mehreren Rührkesseln gebildet ist ;

Figur 2b eine Kurvendarstellung, die das Verweilzeitverhalten der der Rührkesselkaskade nach Figur 2a zugeführten Teilstoffmengen veranschaulicht ;

Figur 3 einen Vertikalschnitt durch eine Ausführungsform einer erfindungsgemäßen Vorrichtung zum Durchführen einer Stoff- und Energieübertragung ;

Figur 4 eine Kurvendarstellung des berechneten Verweilzeitverhaltens der zugeführten Teilstoffmengen in einer 4stufigen idealen Rührkesselkaskade (Kurve A) und des gemessenen Verweilzeitverhaltens in einer gemäß Figur 3 dargestellten 4stufigen Ausführungsform der erfindungsgemäßen Vorrichtung (Kurve B) ;

Figur 5 eine Fotografie einer Flüssigkeits-Umlaufströmung in einer Kammer einer erfindungsgemäßen Kammerkaskade, die auch als Turmkaskade bezeichnet wird, wobei auch die aufsteigende Gasströmung sichtbar ist, welche die Flüssigkeitsumlaufströmung erzeugt ;

Figuren 6a, und 6b zwei weitere Ausführungsformen von erfindungsgemäßen Vorrichtungen ;

Figuren 7a und 7b Ausführungsformen von erfindungsgemäßen Vorrichtungen, die mit zusätzlichen Strömungsleitflächen innerhalb der Kammern zum Zwecke des Führens der Umlaufströmung in den Kammern im Sinne einer Schlaufenströmung versehen sind ;

Figur 8 eine Vorrichtung, bei der ein Schlaufenreaktor, der den untersten Teil dieser Vorrichtung Bildet, mit einer erfindungsgemäßen Vorrichtung kombiniert und zu einer baulichen Einheit vereinigt ist ; und

Figur 9 einen Vertikalschnitt durch zwei im Querschnitt runde und konzentrisch umeinander angeordnete sowie zu einer baulichen Einheit vereinigte erfindungsgemäße Vorrichtungen.

Es sei zunächst eine erste Ausführungsform einer Vorrichtung zum Durchführen einer Stoff- und Energieübertragung erläutert, die in Figur 3 dargestellt ist :

In dieser Vorrichtung befindet sich ein fluides Stoffsystem 1, das im vorliegenden Beispielsfall ein Flüssigkeits-Gas-System ist, in mehreren, strömungsmäßig hintereinandergeschalteten und zu einer Kammerkaskade 2 übereinander angeordneten Kammern 3. Diese Vorrichtung umfaßt im einzelnen weiter eine Zuführungsvorrichtung 4 und/oder eine Zuführungsvorrichtung 5 zum Einspeisen des Flüssigkeitsstroms $\dot{V}_{L\alpha}$, wobei von diesen beiden Zuführungsvorrichtungen 4 und 5 wahlweise eine benutzt wird, so daß der Flüssigkeitsstrom $\dot{V}_{L\alpha}$ zu dem immer unten bei 8 zugeführten Gasstrom $\dot{V}_{G\alpha}$ im Gleich- oder Gegenstrom durch die Kammerkaskade 2 geführt wird.

Weiter umfaßt die Vorrichtung nach Figur 3 eine Abführungsvorrichtung 6 und ggf. eine Abführungsvorrichtung 7 zum Entnehmen von Stoff aus dem fluiden Stoffsystem 1. Wenn der Flüssigkeitsstrom $\dot{V}_{L\alpha}$ im Gleichstrom zu dem Gasstrom $\dot{V}_{G\alpha}$ durch die Kammerkaskade 2 geleitet, also am unteren Ende der unteren Kammer 3 über die Zuführungsvorrichtung 4 zugeführt wird, dann Bann die Abführungsvorrichtung 6 am oberen Ende der oberen Kammer 3 gemeinsam für den austretenden Gasstrom $\dot{V}_{G\omega}$ und den austretenden Flüssigkeitsstrom $\dot{V}_{L\omega}$ verwendet werden. Wenn hingegen der Flüssigkeitsstrom $\dot{V}_{L\alpha}$ im Gegenstrom zum Gasstrom $\dot{V}_{G\alpha}$ durch die Kammersäule 2 geleitet, also über die Zuführungsvorrichtung 5 am oberen Ende der oberen Kammer 3 zugeführt wird, dann wird für den abzuführenden Flüssigkeitsstrom $\dot{V}_{L\omega}$ die am unteren Ende der unteren Kammer befindliche Abführungsvorrichtung 7 benutzt, während die Abführungsvorrichtung 6 dann nur zum Abführen des Gasstroms $\dot{V}_{G\omega}$ dient.

Außerdem sind Strömungsleiteinrichtungen 9 zum Erzeugen einer internen Umlaufströmung 10 in den Kammern 3 vorgesehen. Bevorzugt sind diese Strömungsleiteinrichtungen 9, wie in Figur 2 und anderen Figuren dargestellt, als Zwischenböden ausgebildet, welche den turm- bzw. säulenartigen Behälter 11, der in der Ausführungsform nach Figur 3 vorzugsweise einen rechteckigen Querschnitt hat, in die einzelnen Kammern 3 zu der Kammerkaskade 2 unterteilen, wobei sie jedoch Strömungsdurchtrittsöffnungen 12 freilassen, welche die jeweils untere Kammer mit der darüberliegenden Kammer verbinden, so daß die Kammern 3 strömungsmäßig hintereinandergeschaltet sind. Diese Strömungsdurchtrittsöffnungen sind für den hauptsächlichen Stoffdurchsatz, der durch die Kammerkaskade 2 hindurchgeleitet wird, vorgesehen. Die Strömungsleiteinrichtungen 9 sind Strömungsleitflächen, welche schräg nach oben gerichtet sind und zu den Strömungsdurchtrittsöffnungen 12 verlaufen. In der Ausführungsform nach Figur 3, in welcher die Kammerkaskade 2 vorzugsweise einen rechteckigen Horizontalquerschnitt hat, sind die Strömungsleiteinrichtungen 9 rechteckige Platten, welche an drei der vier Kammerwänden befestigt, beispielsweise angeschweißt, sind, wie bei 13 angedeutet, und welche in einem Abstand von der vierten Kammerwand enden, so daß sich schlitzartige Strömungsdurchtrittsöffnungen 12 ergeben. Die Strömungsdurchtrittsöffnungen 12 sind alternierend von Kammer zu Kammer einmal im Bereich der einen Seitenwand und dann im Bereich der entgegengesetzten Seitenwand angeordnet, so daß sich eine mäanderförmige Gasströmung, wie durch die Blasen und die hellen Pfeile angedeutet, ergibt.

Die Wirkungsweise der in Figur 3 dargestellten Vorrichtung ist folgende :

Der Gasstrom $\dot{V}_{G\alpha}$ wird durch die als Gaseintrittsstutzen ausgebildete Zuführungsvorrichtung 8 außermittig am unteren Ende der untersten Kammer 3 auf derjenigen Seite dieser Kammer, von der die unterste Strömungsleiteinrichtung 9 ausgeht, zugeführt. Der Gasstrom steigt durch seinen Auftrieb zunächst steil aufwärts und wird dann von der untersten Strömungsleiteinrichtung 9 zu der untersten Strömungsdurchtrittsöffnung 12 geführt. Die in der untersten Kammer 3 auf der einen Seite, also einseitig, aufsteigende Gasströmung verursacht auf der anderen Seite dieser Kammer eine durch einen dunklen Pfeil angedeutete Abwärtsströmung der Flüssigkeitsphase, die auch sehr kleine Gasblasen mitnehmen kann. So bildet sich durch Airlift- oder Mammutpumpenwirkung eine Umlaufströmung 10 der Flüssigkeitsphase in der untersten Kammer 3 der Kammerkaskade 2 aus. Diese Umlaufströmung 10 bewirkt eine Durchmischung insbesondere der Flüssigkeitsphase, so daß sich diesbezüglich in der Kammer eine Rührkesselcharakteristik ergibt. Die Gasströmung hingegen durchströmt die Kammer überwiegend mit Rohrcharakteristik.

Der gleiche Vorgang wie in der untersten Kammer 3 wiederholt sich mit alternierendem Seitenwechsel in allen darüber befindlichen Kammern 3. Auf diese Weise entsteht eine n-stufige innere Wirbelkaskade in einem rechteckigen turmartigen Apparat, wobei die Umlaufströmung in jeder Kammer 3 durch den natürlichen Aufstieg der Gasphase, die als Airlift wirkt, angetrieben wird. Eine Rückmischung von einer Kammer zur anderen findet weder für die Flüssigkeitsnoch für die Gasphase statt. Das führt mit zunehmender Stufen- bzw. Kammerzahl der Wirbelkaskade zu der beabsichtigten Annäherung an das Idealrohr (Figur 1c), das gekennzeichnet ist durch $n \to \infty$ wobei n die Anzahl der Stufen bzw. übereinanderliegenden Kammern ist.

Das gas kann innerhalb einer Kammer 3 mehr oder weniger an der Umlaufströmung teilnehmen, je nachdem, ob mehr Stoffübertragung oder mehr Umlaufströmungsantrieb angestrebt wird. In jedem Fall wird durch die Kaskadenwirkung weitgehende Annäherung an Rohrcharakteristik bewirkt.

Für die Flüssigkeitsphase ist in der Regel eine intensive Durchmischung in den Kammern 3 erwünscht, um hier durch Turbulenz höchstmögliche Stoff- uni Energieübertragung zu bewirken.

Hinsichtlich der Zuführung und Abführung der Flüssigkeitsphase sei darauf hingewiesen, daß diese der Flüssigkeitsbewegung in der jeweiligen Kammer 3 fördernd angepaßt ist, denn der jeweils zugeführte Flüssigkeitsstrom ist gleichsinnig mit der Umlaufströmung sowohl an den Zu- und Abführungsvorrichtungen 4 bis 7 wie auch an den Strömungsdurchtrittsöffnungen 12.

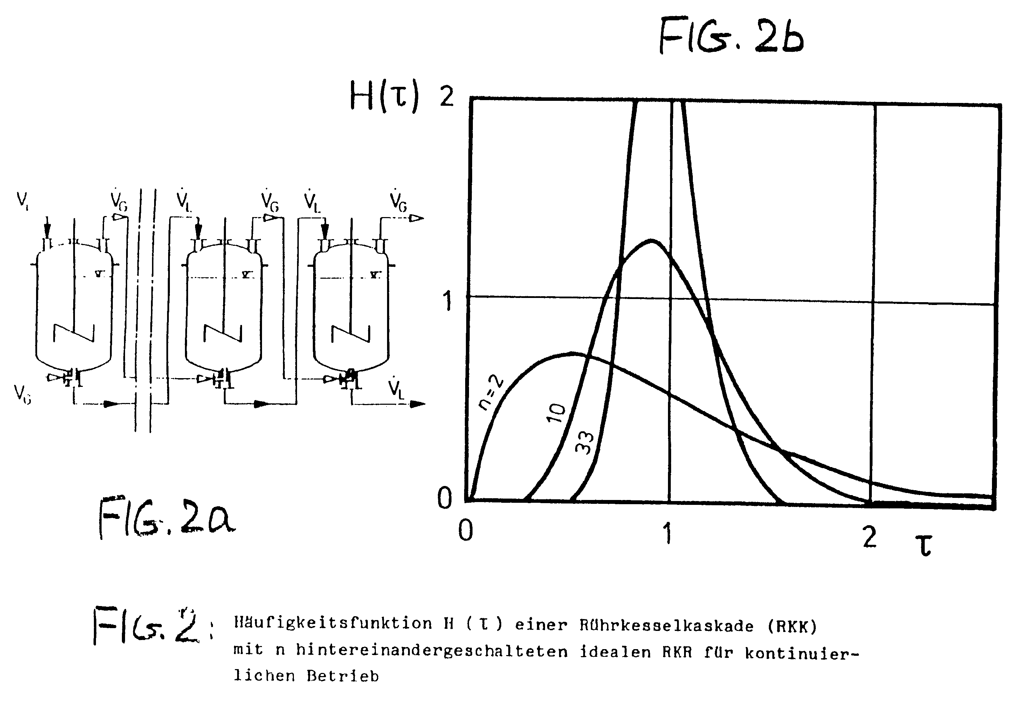

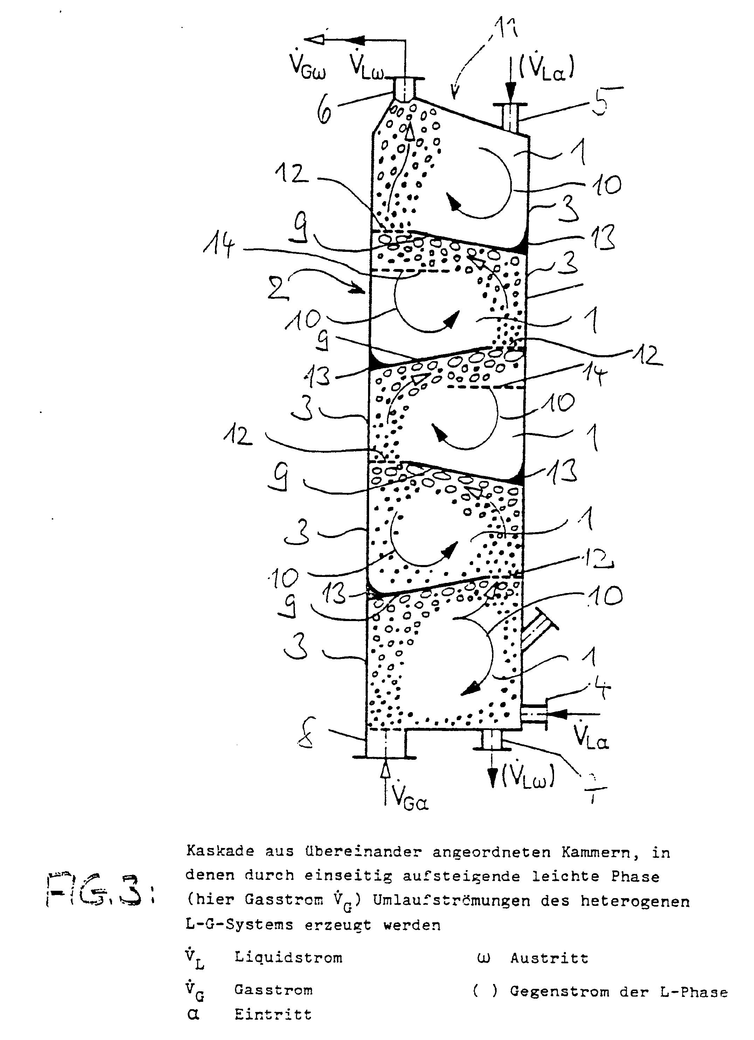

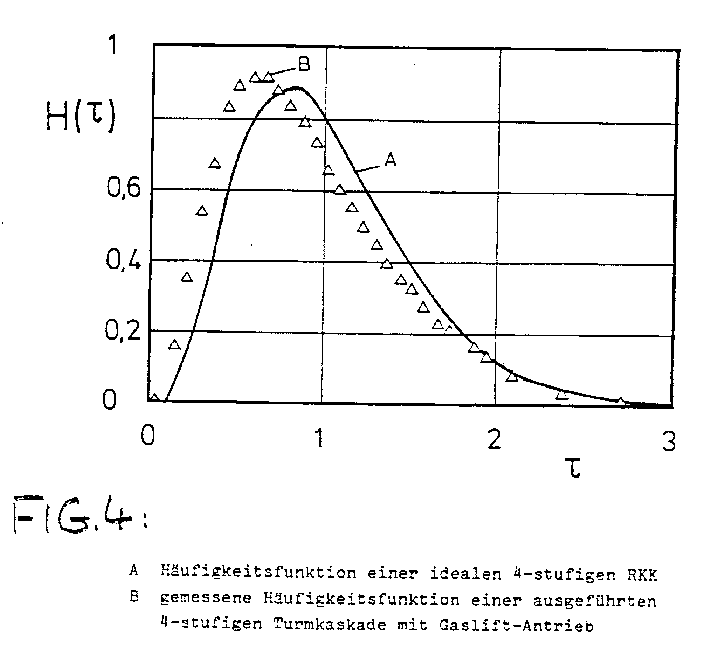

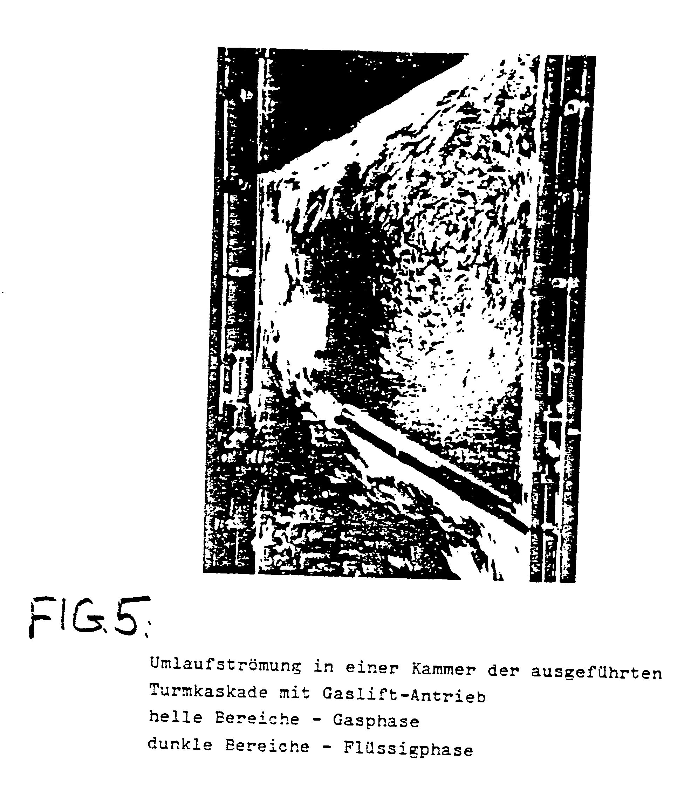

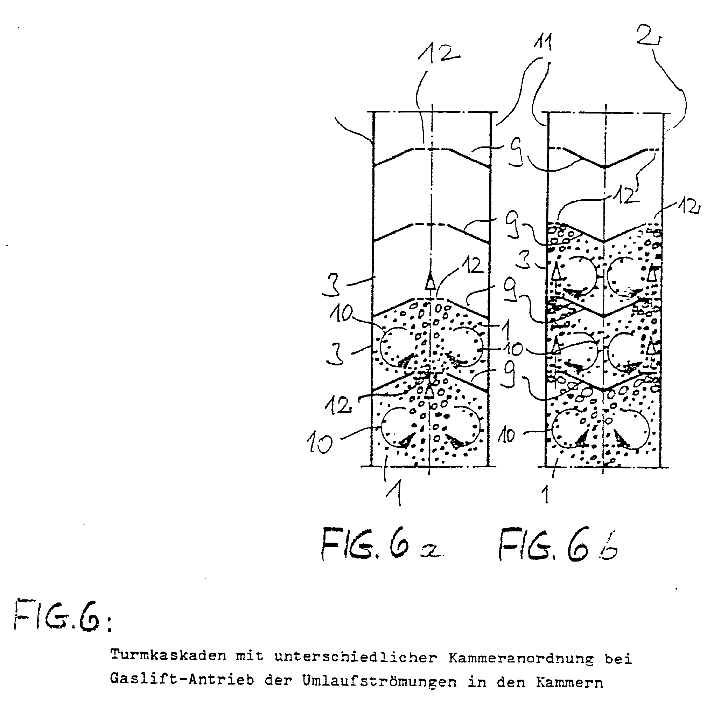

In den Figuren 6a und 6b sind Ausführungsformen im Vertikalschnitt dargestellt, mit denen sich das gleiche Verfahren wie in der Vorrichtung nach Figur 5 ausführen läßt, wobei hier jedoch die säulenartigen Behälter 11 einen runden Horizontalquerschnitt haben und die Strömungsleiteinrichtungen 9 konische Bleche oder Formkörper sind, welche den säulenartigen Behälter 11 als Zwischenböden in die einzelnen Kammern 3 unterteilen, und wobei sie oben entsprechende Strömungsdurchtrittsöffnungen 12 freilassen. Die Ausführungsformen der Figuren 6a und 6b unterscheiden sich voneinander im wesentlichen durch die Anordnung der Strömungsdurchtrittsöffnungen 12 für den hauptsächlichen Stoffdurchsatz durch die Kammerkaskade 2 :

Bei der Ausführungsform nach Figur 6a sind die konischen Strömungsleitflächen 9 alle in der Mitte mit Strömungsdurchtrittsöffnungen 12 versehen, so daß der Gasstrom nur im mittleren Bereich der Kammern 3 aufsteigt, jedoch auch eine torusförmige Umlaufströmung 10 in jeder der Kammern erzeugt.

Schließlich sind in der Ausführungsform nach Figur 6b die Strömungsdurchtrittsöffnungen als Ringspalte nur zwischen den Umfangsrändern der konischen Strömungsleitflächen 9 und der Seitenwand der Kammerkaskade 2 vorgesehen, wodurch ebenfalls eine torusförmige Umlaufströmung 10 erzeugt wird.

Diese Bauweisen nach Fig. 6a und 6b lassen sich auch bei im Horizontalquerschnitt reckteckigen oder quadratischen Kammerkaskaden gemäß Fig. 3 anwenden.

Je nach Gas- und Flüssigkeitsdurchsatz, Viskosität und Koaleszenzverhalten kann die optimal entsprechende Ausführungsform ausgewählt werden. Es sei noch ergänzt, daß die konischen Strömungsleitflächen 9 jeweils so angeordnet sind, daß sie in der Kammer 3, deren oberen Abschluß sie bilden, nach der jeweiligen Strömungsdurchtrittsöffnung 12 hin ansteigen, so daß sie die Gasströmung zu dieser Strömungsdurchtrittsöffnung leiten.

Zur Redispergierung koaleszierter Gasblasen und Tropfen sowie agglomerierter Partikel können Siebe, Lochplatten oder Strahldüsen o.dgl. jeweils in der Zuführungsvorrichtung 8 und in den einzelnen Strömungsdurchtrittsöffnungen 12 beitragen. Zusätzliche Strömungsleitflächen 14 (siehe Figur 3) in Form von Sieben oder perforierten Lenkblechen bzw. -platten können die Gasführung zur Strömungsdurchtrittsöffnung 12 in die nächsthöhere Kammer 3 verbessern und das Einziehen von Gasblasen in die Flüssigkeits-Umlaufströmung 10 vermindern.

Wenn sich in den Ein- und Auslaßöffnungen der Kammern 3, insbesondere in den Strömungsdurchtrittsöffnungen 12, Siebe, Lochplatten o.dgl. befinden, dann können hier auch suspendierte Feststoffe, zum Beispiel Katalysatoren, Adsorbentien oder Partikel mit fixierten Zellen oder Enzymen, zurückgehalten werden. Bei nachlassender Aktivität können sie zum Beispiel über Abführungsvorrichtungen 15, die in der Seitenwand der Kammerkaskade 2 vorgesehen sind, ausgewechselt werden. Die dargestellte Abführungsvorrichtung 15 (Figur 6a) ist ein Stutzen mit einem darin befindlichen Verdrängerkörper, der den Stutzenhohlraum ausfüllt und bündig mit der inneren Kammerwand ist.

Alle festen Partikel oder Tropfen, die in dem Gas-Flüssigkeits-System dispergiert sind, können die Kammerkaskade auch entsprechend ihrer Dichtedifferenz zur Flüssigkeitsphase durchlaufen, abwärts oder aufwärts durch die Strömungsdurchtrittsöffnungen 12.

Falls Gas nur oder zusätzlich zum Erzeugen der Umlaufströmung dienen soll, zum Beispiel Inertgas zusätzlich zu sich bildendem Gas bei anaeroben Bioreaktionen, so kann es auch in kleine elastische Kapseln definierter Größe eingeschlossen sein, die Auftriebskörper bilden, wobei Koaleszenz und Einziehen von kleinen Blasen in den Flüssigkeitsumlauf verhindert werden.

Die Kapseln können zusätzlich außen einen "biologischen Rasen" zur Zell- oder Enzymfixierung bilden. Die Maschenweiten bzw. Durchtrittsöffnungen der Siebe, Lochplatten o.dgl., die in den Strömungsdurchtrittsöffnungen 12 vorgesehen sind, werden natürlich darauf abgestimmt. Die Kapseln, beispielsweise in der angegeben Form von Gaskapseln, können in einem Fallrohr wieder an den Eingang der Kammerkaskade zurückgeführt und zum Beispiel über Schnecken- oder Mohnopumpen bzw. Moineaupumpen wieder eingebracht werden.

Zusätzlich zu kleinen Gaskapseln können auch nichtmischbare spezifisch leichtere Flüssigkeiten oder Feststoffe oder einstellbare Kombinationen aller Stoffphasen frei oder in Umhüllungen aufsteigen und die Umlaufströmung in den Kammern erzeugen bzw. antreiben.

In der Ausführungsform nach Figur 6a ist eine nach aufwärts gerichtete Düse 18 gezeigt, die ebenfalls allein oder im vorliegenden Ausführungsbeispiel in Verbindung mit dem Gasstrom zum Erzeugen bzw. Antreiben der Umlaufströmung 10 vorgesehen sein kann. Insbesondere kann mittels dieser Düse, mit der sich zusätzlich Flüssigkeitsstrahlen hoher Geschwindigkeit, zum Beispiel mit einer Geschwindigkeit von 20 m/sec, injizieren lassen, der Flüssigkeitsumlauf und/oder die Gasdispergierung sowie gegebenenfalls auch die Dispergierung von Feststoffagglomeraten oder koaleszierten nichtlöslichen Flüssigkeitstropfen in der Kammer bzw. Kammersäule erhöht werden. Derartige Düsen 18 können auch im Bereich jeder der Strömungsdurchtrittsöffnungen 12 angeordnet sein, wobei natürlich im Falle von ringförmigen Strömungsdurchtrittsöffnungen 12 Ringdüsen bzw. eine ringförmige Anordnung von Düsen und im Falle von schlitzförmigen Durchtrittsöffnungen 12 (Figur 3) eine Spaltdüse bzw. eine lineare Düsenanordnung verwendet werden. Die Düsen 18 können auch innerhalb der Kammern 3 vorgesehen sein. Diese aufwärts oder auch anders gerichteten Düsen können grundsätzlich einen fluiden Stoff beliebiger Dichte injizieren, da diese Stoffströme nur hydrodynamisch durch Impulsübertragung, jedoch nicht hydrostatisch durch Auftrieb, die Umlaufströmung antreiben. Beide Antriebsarten lassen sich je nach System und Aufgabenstellung einander ergänzend koppeln.

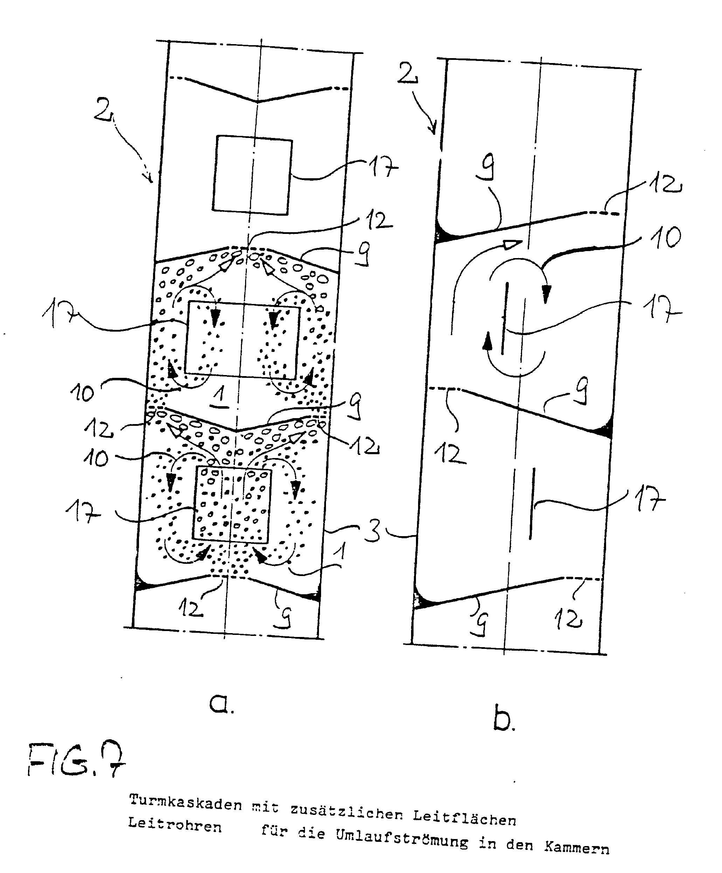

Die Figuren 7a und 7b zeigen Ausführungsformen der vorgeschlagenen Vorrichtung, in denen als zusätzliche Strömungsleitflächen 17 solche Strömungsleitflächen innerhalb der Kammern vorgesehen sind, welche die Umlaufströmung 10 definiert lenken. So ist in der Vorrichtung nach Figur 7a, in der die Kammerkaskade einen runden Horizontalquerschnitt hat, jede Kammer 3 mit einem konzentrischen Leitrohr als zusätzlicher Strömungsfläche 17 versehen, das die Umlaufströmung, wie durch die dunklen Pfeile angedeutet, definiert lenkt. In der Ausführungsform nach Figur 7b, in der eine Kammerkaskade mit rechteckigem Horizontalquerschnitt dargestellt ist, wie sie anhand der Figur 3 in näheren Einzelheiten erläutert wurde, sind als zusätzliche Strömungsleitflächen 17 Leitbleche bzw. -platten, beispielsweise senkrecht, angeordnet. Es sei darauf hingewiesen, daß bei der Ausführungsform nach Figur 7a nicht nur ein Leitrohr konzentrisch in der jeweiligen Kammer angeordnet sein kann, sondern daß auch mehrere konzentrische Leitrohre als zusätzliche Strömungsleitflächen 17 vorgesehen sein können. In beiden Ausführungsformen nach Figur 7a und 7b erhält man Schlaufenkaskaden mit definiert gelenkter Umlaufströmung in jeder Kammer, die durch das aufsteigende Gas, wie durch helle Pfeile angedeutet, angetrieben werden.

Die zusätzlichen Strömungsleitflächen 17 können ebenso wie die Seitenwände der Kammern, die Strömungsleitflächen 9 und/oder die zusätzlichen Strömungsleitflächen 14 oder sonstige Einbauten doppelwandig ausgeführt werden und als zusätzliche Heiz- oder Kühleinrichtungen dienen. Sie können aber auch als Doppelmembran oder als Membranträger oder mit perforierten Wänden zu feinverteilter Zufuhr von Stoffen, zum Beispiel Substrat bei Bioreaktionen, dienen oder zum selektiven Abzug von Stoffen, die beispielsweise zur Produktinhibierung führen Außerdem eignen sich die vorstehend erwähnten Bauelemente der Vorrichtung, beispielsweise die genannten Leitrohre, auch zur Zell- und Enzymfixierung an ihren Oberflächen oder zum Beispiel als Träger von Festbetten in den von ihnen gebildeten zwangsdurchströmten Teilräumen der Kammern.

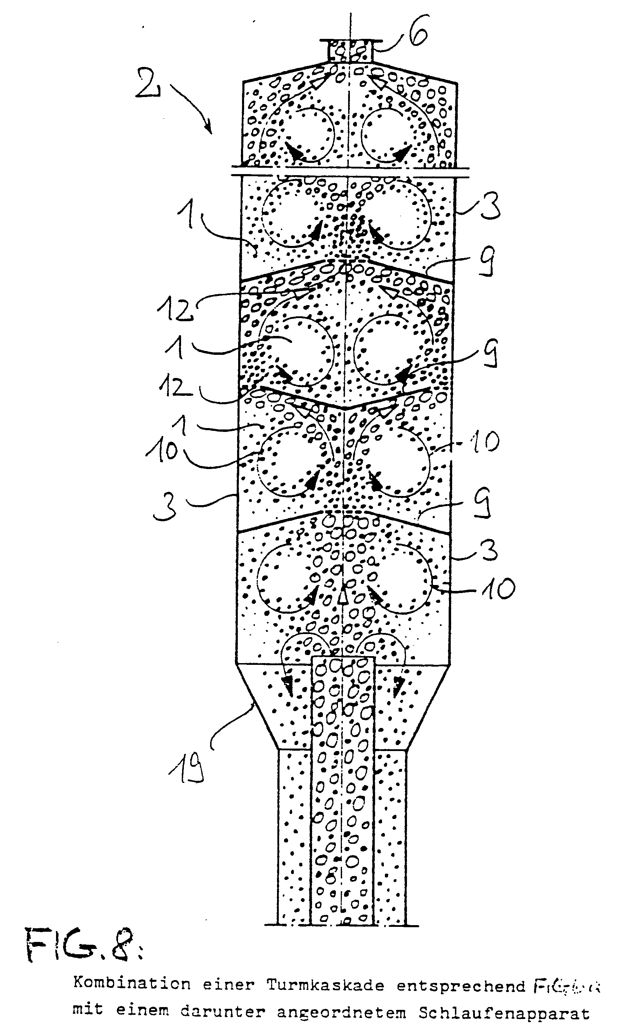

Als Beispiel für eine Kombination einer Kammerkaskade der in Figur 6a dargestellten Art mit anderen Apparatetypen zeigt Figur 8 eine Schlaufeneinrichtung im unteren Teil, auf die eine Kammerkaskade der in Figur 6a gezeigten Art aufgesetzt ist. Der konische Übergang wirkt als "Entgasungskopf" und vermindert den Einzug von Gasblasen in die Abwärtsströmung der Schlaufenapparatur und verstärkt damit den Umlaufströmungsantrieb im Schlaufenteil.

Für die Vergrößerung jeder Kammerkaskade als geschlossene Baueinheit gibt es zwei Möglichkeiten, nämlich Vergröße rung der Höhe und/oder des Querschnitts. Für jede einzelne Kammer lassen sich abhängig von Stoff- und Betriebsparametern optimale Formen und Abmessungen bestimmen, die zum Beispiel für die benötigte Umlaufströmungsintensität den kleinsten Leistungsauwand erfordern. Höhe und Querschnitt einer Wirbelkammer erreichen ihre Grenzwerte, wenn die Umlaufströmung nicht mehr das gesamte Kammervolumen erfaßt.

Geht man von den optimalen Proportionen und den Grenzgrößen der einzelnen Kammern aus, so ist es vorteilhaft, eine Vergrößerung der Kammerkaskade zunächst über größere Höhe, d.h. mehr übereinander angeordnete Kammern, zu realisieren. So erhöht sich die Zahl der "hintereinandergeschalteten" Einheiten der Kammerkaskade und damit eine Annäherung ihres Verweilzeitverhaltens an das der idealen Rohrströmung (Propfenströmung).

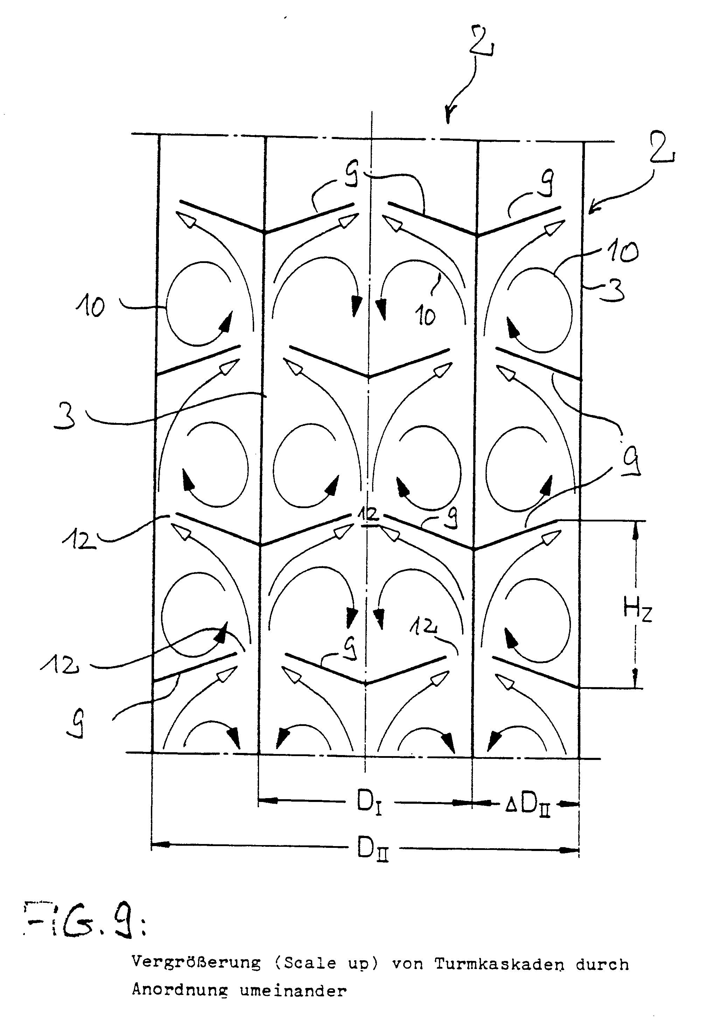

Wird die maximal zulässige Höhe der Kammerkaskade erreicht, so ist ihre weitere Vergrößerung nur noch durch Erhöhung des Querschnitts möglich. Wie die Abbildung 9 zeigt, erfolgt das vorteilhafterweise bei einer runden Kammerkaskade mit dem Durchmesser $D_I$, indem man sie mit einer konzentrischen ringförmigen Kammerkaskade umgibt, wodurch sich der Durchmesser der so gebildeten Kaskadeneinheit (Gesamtkaskade) auf $D_{II}$ vergrößert. Für die Kammern dieser ringförmigen Kammerkaskade lassen sich ebenfalls optimale Proportionen $\Delta D_{II} = D_{II} - D_I$ und Höhe $H_Z$ sowie Grenzgrößen erzielen.

Die Anordnung der Strömungsleitflächen 9 in der ringförmigen Kammerkaskade der Figur 9 erfolgt vorteilhafterweise gemäß Figur 3, sie kann jedoch im Prinzip auch in anderer Weise, wie in den Figuren 6 und 7 dargestellt, ausgeführt sein, ebenso wie die Ausführung sonstiger Einbauten.

Erreicht diese Ausführung mit dem optimalen bzw. maximalen Durchmesser $D_{II}$ die maximale Höhe, so kann eine weitere Vergrößerung des Volumens durch eine weitere konzentrische ringförmige Kammerkaskade erfolgen, für die das gleiche gilt wir für die erste ringförmige Kammerkaskade. Auf diese Weise lassen sich sehr große Volumina von Kammerkaskadden durch weitere ringförmige Kammerkaskaden verwirklichen.

Bei rechteckigen Kammerkaskaden, wie beispielsweise in Figur 3 dargestellt, erfolgt die Querschnittserweiterung vorteilhaft durch Nebeneinanderoder Umeinanderanordnen von weiteren rechteckigen Kammerkaskaden. Auch wabenförmige Anordnungen von Kammerkaskaden ergeben baulich günstige Ausführungen.

In allen Fällen der Kombination mehrerer Kammerkaskaden in einem Apparat ergibt sich der Vorteil, daß gemeinsame Trennwände der einzelnen Kammerkaskaden bei gleicher Füllung praktisch völligen Druckausgleich ergeben und infolgedessen geringe Wanddicke erfordern. In dieser Hinsicht ist die runde Ausführung mit umeinander angeordneten ringförmigen Kammerkaskaden am günstigsten.

Die Stoffströme können die einzelnen Kammerkaskaden, die zu einer Baueinheit zusammengefügt sind, parallel und/oder hintereinandergeschaltet durchfließen. Eine Hintereinanderschaltung vergrößert die Zahl n der Kammern in der Kaskade und damit die Annäherung an ideale Rohrcharakteristik. Grundsätzlich gilt für die leichte Phase, beispielsweise Gas, daß sie am Boden jeder einzelnen Kammerkaskade zugeführt wird, damit sie mit ihrem natürlichen Aufsteigen die Umlaufströmung in den Kammern antreibt. Die schwere Phase, zum Beispiel eine Flüssigkeitsphase in einem Gas-Flüssigkeits-System, kann am Boden oder am Kopf oder in beliebiger Höhe jeder Kammerkaskade zugeführt werden und so im Gegen- und/ oder Gleichstrom zur leichteren Stoffphase innerhalb jeder einzelnen Kammerkaskade und der Gesamtkaskade in verfahrensgünstiger Kombination geführt werden. Es ergeben sich viele Anpassungsmöglichkeiten an die sehr verschiedenartigen chemischen und biochemischen Systeme sowie durch Modulbauweise an alle Größen.

Es sei abschließend noch auf die Figuren 4 und 5 hingewiesen, von denen die Figur 4 zeigt, daß die Häufigkeitsfunktion einer 4stufigen Kammerkaskade mit Gasantrieb der Umlaufströmung in den Kammern (Kurve B) mit hoher Annäherung der Häufigkeitsfunktion einer idealen 4stufigen Rührkesselkaskade (Kurve A) entspricht, was eine gute Annäherung der Mischwirkung durch die Umlaufströmung in jeder Kammer an die des Idealkessels bedeutet. Das zeigt auch Figur 5 mit der fotografischen Wiedergabe der Umlaufströmung in einer Kammer der 4stufigen Kammerkaskade, welche allein durch die aufsteigende Gasströmung erzeugt wird, wobei helle Bereiche die Gasphase veranschaulichen, während die dunklen Bereiche die Flüssigkeitsphase wiedergeben.

Die Kammerkaskaden nach der Erfindung haben insbesondere folgende Vorteile :

1. Erzeugung von Flüssigkeitsumlaufströmungen (Durchmischung) in allen Kammern der Kaskade durch aufsteigende Gase oder spezifisch leichtere Teilchen, jedenfalls ohne bewegte Teile (Rührer) und Wellendichtungen : Dichtigkeit, Sterilität ; geringe Energiekosten.

2. Vielstufige Kammerkaskade mit übereinander angeordneten Kammern in hohen turmartigen Apparaten oder mit nebeneinander angeordneten Kammern oder Teilkaskaden beliebiger Form mit einfachen festen Leiteinrichtungen : geringe Investitions- und Wartungskosten.

3. Weitgehende Annäherung aller Stoffströme an Rohrcharakteristik durch sehr vielstufige Kaskade (n $\geq$ 10) :
hoher und gleichmäßiger "Umsatz" bei zeitabhängigen verfahrenstechnischen Prozessen.

4. Nutzung des zur Durchführung des verfahrenstechnischen Vorgangs erforderlichen aufsteigenden Gases oder spezifisch leichterer Flüssigkeit und von Feststoffen in der Flüssigkeitsphase :
Die Umlaufströmung ergibt sich als kostenloser Nebeneffekt, da Gas oder spezifisch leichtere Stoffe sowieso unten zugeführt werden müssen und von selbst aufsteigen oder sich im Stoffsystem bilden (Biogas bei anaerober Bioreaktion).

5. Nutzung aller Bauteile für zusätzliche Wärme- und Stoffübertragung (zum Beispiel selektiver Produktabzug) sowie für Fixierung von Zellen und Enzymen :
Verbesserung von Umsatz und Selektivität ; größere Ausführungen ; besseres Stabilitätsverhalten.

6. Zurückhalten partikelfixierter Zellen und Enzyme in den Kammern durch deren Abgrenzung mit Sieben oder ähnlichem :
Ermöglichung und Verbesserung enzymatisch katalysierter Reaktionen bei kontinuierlichem Betrieb.

7. Gleich- oder Gegenstrombetrieb insbesonder für Gas- und Flüssigkeitsphase :
Anpassung an geforderte Konzentrationsdifferenzen.

8. Kombination mit beliebigen anderen Apparatetypen :
Gezielte Anpassung des Verfahrens und der Vorrichtung an geforderte Betriebsbedingungen.

Nachstehend seien einige Anwendungsbeispiele für das Verfahren und die Vorrichtung nach der Erfindung angegeben, auf welche die Erfindung jedoch in keiner Weise beschränkt ist :

## Anwendungsbeispiel 1

Homogenes Flüssigreaktionssystem, zum Beispiel Acetatherstellung aus Essigsäure und Methanol/Ethanol/Propanol. Als Antrieb zum Erzeugen der Umlautströmung in den Kammern kann die Eingabe von Inertgas (hydrostatisch) und/oder das Umpumpen eines Teilstromes und Eindüsen als Treibstrahl (hydrodynamisch) am Boden der Kammerkaskade und eventuell zusätzlich in einzelne Kammern dienen. Weiterhin kann das Einbringen von Hohlkapseln als Auftriebskörper, die über einen Kreislauf oben abgezogen und unten wieder zugeführt werden, einen hydrostatischen Antrieb der Umlaufströmungen bewirken. Gegenüber herkömmlichen Reaktoren ergeben die gleichbleibend hohe Mischgüte in den einzelnen Kammern sowie die Erhöhung von Umsatz und Ausbeute durch Rohrcharakteristik der erfindungsgemäßen Kammerkaskaden Vorteile.

## Anwendungsbeispiel 2

Heterogene Gas-Feststoff-Reaktion, zum Beispiel Kohlevergasung, oder Gas-Feststoffkatalyse, zum Beispiel Ammoniaksynthese.

Der Katalysator oder der zu reagierende Feststoff wird durch das Reaktionsgas, das am Boden der Kammerkaskade und eventuell zusätzlich in einzelne Kammern eingebracht wird, verwirbelt. In den einzelnen Kammern bilden sich so Wirbelschichten. Gegenüber herkömmlichen Wirbelschichten wird eine bessere Einheitlichkeit des Endproduktes durch die Kaskadenschaltung bei gleichbleibend hoher Mischgüte in den einzelnen Kammern sowie Erhöhung von Umsatz und Ausbeute erreicht.

## Anwendungsbeispiel 3

Heterogenes Gas-Flüssig-Feststoff-System, zum Beispiel Produktion von Einzeller-Eiweiß (Single Cell Protein = SCP) durch Mikroorganismen mit Luft als Reaktionsteilnehmer.

Es handelt sich dabei um eine aerobe Fermentation, die zum Beispiel mit dem Bakterium Methylomonoas clara auf Methanolbasis durchgeführt werden kann.

Bei einer technisch realisierbaren Zellkonzentration von 1,6% liegt – für optimale Betriebsbedingungen – die spezifische Wachstumsrate bei 0,25 kg/(kg · h), was einer spezifischen Produktivität von 4 kg/(m$^3$ · h) entspricht. Um diese Produktivität zu erreichen, müssen je m$^3$ Kulturbrühe 8 kg/(m$^3$ · h) Methanol, 1,2 kg/(m$^3$ · h) Ammoniak und 8 kg/(m$^3$ · h) Sauerstoff zugeführt werden.

Der Zufuhr und Durchmischung dieser Stoffe kommt besondere Bedeutung zu, da die Methanolkonzentration in der Kulturbrühe zwischen 1‰ und 1% liegen muß und die flüssigkeitsseitige Sauerstoffkonzentration 1 ppm nicht unterschreiten darf.

Durch die in der erfindungsgemäßen Kammerkaskade gewährleistete gute Durchmischung innerhalb der Kammern und durch Substratzufuhr in einzelne Kammern können die aufgeführten Grenzwerte sicher eingehalten werden.

Die in der Flüssigphase notwendige Sauerstoffkonzentration muß durch Absorption von Luftsauerstoff aus der antreibenden Gasphase (Gas ≡ Luft) bei einer ausreichend großen Phasengrenzfläche von etwa 2000 m$^2$/m$^3$ gesichert sein. Diese Phasengrenzfläche wird durch Dispergierung des antreibenden Luftstromes, der am Kammerkaskadenboden und eventuell zusätzlich in einzelne Kammern eingebracht wird, und durche dessen wiederholte Redispergierung zwischen den Kammern geschaffen.

## Anwendungsbeispiel 4

Biochemische Reaktion im Gas-Flüssigkeits-Feststoff-System mit bei der Reaktion entstehendem Gas (anaerobe Abwasseraufarbeitung).

Am Beispiel der anaeroben Aufarneitung von Abwässern aus lebensmitteltechnischen Betrieben soll die besondere Eignung der Erfindung für Gas-Flüssigkeits-Feststoff-Systeme gezeigt werden. Die Reinigung solcher Abwässer erfolgt vorzugweise mit anaeroben Mikroorganismen.

Vorteile gegenüber aeroben Mikroorganismen :
– keine Belüftung zur Versorgung der Mikroorganismen mit O$_2$ notwendig (Betriebskosten) ;
– Produktion von Biogas (≈ 50 bis 70% CH$_4$ ; ≈ 30 bis 50% CO$_2$) (Energieträger) ;
– nur ≈ 5% der Abwasserinhaltsstoffe werden als Zellmasse aufgebaut (Aerobier ≈ 50%) ; kein Schlammproblem (Abtrennung, Trocknung, Entsorgung des Schlammes).

Der letztgenannte Vorteil ist zugleich auch eines der größten Probleme :

Hohe Konzentration frei im Reaktor suspendierter Zellen läßt sich bei anaeroben Systemen infolge des bei kontinuierlichem Betrieb auftretenden Fließgleichgewichts zwischen Zellmasseprodution und Auswaschung nicht erreichen. Biomasse muß im Reaktor angereichert werden. Dies geschieht vorzugsweise durch Immobilisieren (Aufwachsen) der anaeroben Mikroorganismen auf inerten Trägerpartikeln von zum Beispiel 0,1 bis 0,2 mm Durchmesser. Dadurch können Biomassekonzentrationen ≥ 10 kg Trockensubstanz/m$^3$ erreicht werden. Im Vergleich zu herkömmlichen anaeroben Gärfermentern ohne Immobilisierung ergibt sich dadurch eine Verringerung des Reaktorvolumens auf etwa 1/20.

Die anaerobe Abwasserreinigung mit der erfindungsgemäßen Kammerkaskade erfolgt in nachstehender Weise :

Das über Puffertanks (Vereinheitlichung, Neutralisierung) geleitete Abwasser ($\dot{V}_{L\alpha}$) durchströmt die Kammerkaskade beispielsweise von unten nach oben (vergleiche Figur 3 oder 5). Dabei entsteht durch den anaeroben Abbau der Abwasserinhaltsstoffe Biogas, so daß der Gasvolumenstrom $\dot{V}_G$ von Kammer zu Kammer zunimmt. Bei ausreichendem Gasstrom $\dot{V}_G$ kann dieses zum Beispiel allein zum Antrieb und zur Fluidisierung der Wirbelschichten aus inerten Trägerpartikeln verwendet werden. Anstelle der Wirbelschichten könnten auch Festbetten (zum Beispiel mit porösen Glaskugeln) zur Fixierung der anaeroben Mikroorganismen dienen. In den untersten Kammern reicht das gebildete Biogas noch nicht zum Antrieb der Umlaufströmung und zur Fluidisierung aus. Hier bieten sich dre Möglichkeiten an :

(a) hydrodynamischer Antrieb mit Flüssigkeitsstrahl über Düse (Bezugszeichen 18 in Figur 6a) zum Beispiel durch Ausnützen der hydrostatischen Druckhöhe zwischen Puffertanks und Kammerkaskade ; oder

(b) Rezirkulation eines Teils des gebildeten Biogases vom Kopf der Kammerkaskade in die unterste Kammer ; oder

(c) Kombination von Schlaufenapparat mit Kammerkaskade (Figur 8), so daß im Schlaufenapparat gebildetes Biogas schon zum Antrieb und zur Fluidisierung der inerten Trägerpartikel in der untersten Kammer der Kammerkaskade ausreicht.

Die besondere Eignung der erfindungsgemäßen Kammerkaskade für die beschriebene anaerobe Abwasserreinigung mit fixierten Mikroorganismen besteht nicht zur in der Möglichkeit der individuellen Anpassung der Vorrichtung an den Prozeß, sondern in besonderem Maße auch im praktisch "kostenlosen" Antrieb der Umlaufströmungen in den Kammern durch das aus den zu beseitigenden Abwasserinhaltsstoffen entstehende Biogas.

Insgesamt sei darauf hingewiesen, daß die Ausführungsformen der Vorrichtung nach der Erfindung und des erfindungsgemäßen Verfahrens, die unter Bezugnahme auf die Zeichnungen erläutert wurden, zwar anhand eines Gas-Flüssigkeits-Systems beschrieben worden sind, daß jedoch ein solches Gas-Flüssigkeits-System nur als Beispiel gewählt wurde und die Erfindung, wie im allgemeinen Beschreibungsteil und in den Patentansprüchen angegeben, praktisch auf alle fluiden Stoffsysteme, einschließlich fluidisierter Stoffsyseme, anwendbar ist. Außerdem gelten Merkmale, die anhand bestimmter Ausführungsformen beschrieben wurden, auch für alle anderen Ausführungsformen, sofern sie darauf übertragbar sind. Beispielsweise können die ebenen Strömungsleitflächen 9 der Figur 3 auch in Kammerkaskaden mit rundem Horizontalquerschnitt vorgesehen sein etc. Außerdem ist zu beachten, daß der zur Stoff- und Energieübertragung zugeführte Stoffstrom auch aus mehreren Einzelstoffen von gleichem oder unterschiedlichem Aggregatzustand bestehen kann, die an gleichen oder unterschiedlichen Stellen zu- und abgeführt werden können. Es erscheint im übrigen überflüssig, darauf hinzuweisen, daß die Erzeugung der Umlaufströmungen in den einzelnen Kammern ein solches Aufsteigen des aufgrund seines Auftriebs aufsteigenden Stoffes erfordert, das lokal auf einen horizontalen Querschnittsbereich der Kammern begrenzt ist.

## Ansprüche

1. Verfahren zur Stoff- und/oder Energieübertragung oder zur Durchführung von (bio-) chemischen Reaktionen in heterogenen Gas-Liquid-Systemen, bei dem das heterogene fluide Stoffsystem strömungsmäßig hintereinander geschaltete und in Form einer turmartigen Kaskade übereinander angeordnete Kammern durchläuft, die durch Strömungsleitflächen getrennt sind, dadurch **gekennzeichnet**, daß in den Kammern interne Umlaufströmungen (10) des heterogenen fluiden Systems (1) durch Gas (8) erzeugt werden, das aufgrund seiner Auftriebskraft in der Flüssigkeit in Teilbereichen der Kammern aufsteigt, und alle durch die Kaskade strömenden Phasen den benachbarten Kammern durch wenigstens eine Durchtrittsöffnung (12) zugeführt werden, wobei diese Durchtrittsöffnungen im höchsten Bereich der Strömungsleitflächen vorgesehen sind.

2. Verfahren nach Anspruch 1, dadurch **gekennzeichnet**, daß das die internen Umlaufströmungen (10) erzeugende Gas der Kammerkaskade (2) unten zugeführt wird.

3. Verfahren nach Anspruch 1, dadurch **gekennzeichnet**, daß das die internen Umlaufströmungen (10) erzeugende Gas als Reaktionsprodukt in den Kammern (3) erzeugt wird.

4. Verfahren nach einem der Ansprüche 1 bis 4, dadurch **gekennzeichnet**, daß das die internen Umlaufströmungen (10) erzeugende Gas wenigstens teilweise im Kreislauf durch die Kammerkaskade (2) oder einen Teil derselben geführt wird.

5. Verfahren nach einem der Ansprüche 1 bis 4, dadurch **gekennzeichnet**, daß das Gas, welches die internen Umlaufströmungen (10) erzeugt, einen mit dem fluiden Stoffsystem (1) chemisch oder biochemisch reaktiven Stoff enthält.

6. Verfahren nach einem der Ansprüche 1 bis 6, dadurch **gekennzeichnet**, daß koaleszierte oder agglomerierte Stoffe im fluiden Stoffsystem (1) redispergiert werden.

7. Verfahren nach einem der Ansprüche 1 bis 6, dadurch **gekennzeichnet**, daß in der Kammerkaskade (2) durch Einbauten, vorzugsweise Strömungsleiteinrichtungen, verfahrensfördernde Stoffe zugeführt und/oder verfahrenshemmende Stoffe abgeführt und/oder biologische oder chemische Katalysatoren fixiert und/oder dem Stoffsystem (1) zusätzliche Wärme zugeführt oder entzogen wird.

8. Verfahren nach einem der Ansprüche 1 bis 7, dadurch **gekennzeichnet**, daß das die internen Umlaufströmungen (10) erzeugende Gas, wenigstens teilweise in einem vorgeschalteten Verfahrensschritt erzeugt und der untersten Kammer der Kaskade zugeführt wird.

9. Verfahren nach einem der Ansprüche 1 bis 8, dadurch **gekennzeichnet**, daß mittels der Umlaufströmungen in den Kammern (3) Wirbelschichten aus Partikeln, die als Katalysatoren, Reaktionspartner oder als Träger zur Fixierung von chemischen oder biologischen Katalysatoren verwendet werden, erzeugt werden, wobei die Partikel durch die Kammerkaskade (2) durchlaufen gelassen oder in den Kammern austauschbar zurückgehalten werden.

10. Verfahren nach einem der Ansprüche 1 bis 9, dadurch **gekennzeichnet**, daß das in Teilbereichen der Kammern (3) aufsteigende, die internen Umlaufströmungen (10) erzeugende Gas durch zusätzliche Strömungsleitflächen (14) gelenkt wird.

11. Vorrichtung zur Durchführung von Verfahren nach einem der Ansprüche 1 bis 10, dadurch **gekennzeichnet**, daß in einer turmartigen Kaskade (2) ebene, bogenförmige oder kegelmantelförmige Strömungsleitflächen (9) ansteigend angeordnet sind und die Kammern (3) oben begrenzen, wobei diese jeweils mindestens eine Durchtrittsöffnung (12) für Gas und alle anderen Stoffe in ihrem höchsten Bereich zu benachbarten Kammern aufweisen und diese Durchtrittsöffnungen (12) übereinander angeordneter Strömungsleitflächen (9) fluchtend und/oder gegeneinander versetzt sind.

12. Vorrichtung nach einem der Ansprüche 1 bis 11, dadurch **gekennzeichnet**, daß innerhalb der Kammern (3) zusätzliche Strömungsleitflächen (14, 17) vorgesehen sind.

13. Vorrichtung nach Anspruch 11 oder 12, dadurch **gekennzeichnet**, daß in den Strömungsdurchtrittsöffnungen (12) Siebe, Lochplatten oder Strahldüsen (18) vorgesehen sind.

14. Vorrichtung nach einem der Ansprüche 11 bis 13, dadurch **gekennzeichnet**, daß als Stoff zum Erzeugen der Umlaufströmung (10) Auftriebskörper vorgesehen sind, und daß unten an der Kammerkaskade (2) eine Zuführungsvorrichtung und oben and der Kammerkaskade (2) eine Abführungsvorrichtung für die Auftriebskörper vorgesehen sind, wobei zwischen beiden eine Rückführeinrichtung zur Rezirkulation der Auftriebskörper vorgesehen ist.

15. Vorrichtung nach einem der Ansprüche 11 bis 14, dadurch **gekennzeichnet**, daß mit dem fluiden Stoffsystem (1) in Strömungskontakt befindliche Bauteile (2, 9, 11, 14, 17) doppelwandig ausgebildet und mit einer Zu- und/oder Abführungsvorrichtung für Stoffe versehen sind.

16. Vorrichtung nach einem der Ansprüche 11 bis 15, dadurch **gekennzeichnet**, daß der Kammerkaskade (2) eine Misch- und/oder Reaktoreinrichtung, welche den die Umlaufströmung (10) bewirkenden Stoff zuführt und/oder erzeugt, vorgeschaltet ist (Figur 8).

17. Vorrichtung nach einem der Ansprüche 11 bis 16, dadurch **gekennzeichnet**, daß mehrere Kammerkaskaden (2) baulich zu einer Kaskadeneinheit vereinigt sind (Figur 9).

18. Vorrichtung nach Anspruch 17, dadurch **gekennzeichnet**, daß die einzelnen Kammerkaskaden (2) konzentrisch umeinander angeordnet sind.

19. Vorrichtung nach Anspruch 17 oder 18, dadurch **gekennzeichnet**, daß die Kaskadeneinheit eine den gemeinsamen Druck der fluiden Stoffsysteme (1) in den einzelnen Kammerkaskaden (2) aufnehmende Außenwand aufweist, während die im Inneren der Kaskadeneinheit befindlichen Trennwände, die benachbarten Kammerkaskaden (2) gemeinsam sind, weniger druckfest als die Außenwand ausgebildet sind.

**Claims**

1. Method for transmitting material and energy or for carrying through (bio) chemical reactions in heterogeneous gas/liquid systems wherein said heterogeneous fluid system passes through compartments which are disposed in tandem relationship in terms of flow and which are superimposed so as to constitute a cascade of compartments which are separated by flow deflector surfaces,
**characterized** in that internal circulating flows (10) of said heterogeneous fluid system (1) are created in said compartments by a gas (8) which as a result of its buoyant force rises in the liquid in partial zones of said compartments, and that all phases flowing through said cascade are fed into the adjacent compartments through at least one passage opening (12), said passages being provided in the topmost section of said flow deflector surfaces.

2. Method according to Claim 1,
**characterized** in that the gas creating said internal circulating flows (10) is supplied to the cascade (2) of compartments at the bottom thereof.

3. Method according to Claim 1,
**characterized** in that the gas creating said internal circulating flows (10) is produced in said compartments (3) as a reaction product.

4. Method according to any of Claims 1 to 4,
**characterized** in that the gas creating said internal circulating flows (10) is circulated, at least in parts, through said cascade (2) of compartments or one part thereof.

5. Method according to any of Claims 1 to 4,
**characterized** in that the gas creating said internal circulating flows (10) contains a substance apt to undergo a chemical or biochemical reaction with said fluid system (1).

6. Method according to any of Claims 1 to 5,
**characterized** in that coalesced or agglomerated substances are re-dispersed in said fluid system (1).

7. Method according to any of Claims 1 to 6,
**characterized** in that in said cascade (2) of compartments, by means of fittings, preferably flow deflector means, substances conducive to the process are supplied and/or substances inhibiting the process are removed and/or biological or chemical catalysts are fixed and/or additional heat is supplied to or removed from said system of matter (1).

8. Method according to any of Claims 1 to 7, **characterized** in that the gas creating said internal circulating flows (10) is produced at least partially in a preceding step of method and is supplied to the lowermost compartment in the cascade.

9. Method according to any of Claims 1 to 8, **characterized** in that the circulating flows in said compartments (3) serve o create vortex layers consisting of particles used as catalysts, reactants or carriers for fixing chemical or biological catalysts, with said particles being allowed to pass through said cascade (2) of compartments or being retained in said compartments for exchange.

10. Method according to any of Claims 1 to 9, **characterized** in that the gas rising in partial areas of said compartments (3) and creating said internal circulating flows (10) is guided by means of additional flow deflector surfaces (14).

11. Device for carrying through methods according to any of Claims 1 to 10, **characterized** in that in a tower-type cascade (2) plana or arcuate flow deflector surfaces (9) or flow deflector surfaces (9) in the form of a cone-shaped shell are disposed in an ascending arrangement and define the top of said compartments (3), with each of the latter presenting at least one passage opening (12) for gas and all other substances in its topmost zone contiguous to adjacent compartments, and that said passages (12) of flow deflector surfaces (9) disposed one above the other are either flush with and/or offset from each other.

12. Device according to any of Claims 1 to 11, **characterized** in that additional flow deflector surfaces (14, 17) are provided within said compartments (3).

13. Device according to claim 11 or 12, **characterized** in that screens, perforated plates or jet injector nozzles (18) are provided in said flow passage openings (12).

14. Device according to any of Claims 11 to 13, **characterized** in that buoyant bodies are provided as the matter creating said circulating flow (10), and that at the bottom of said cascade of compartments (2) a feeder means is provided while at the top of said cascade of compartments (2) discharge means are provided for removal of said buoyant bodies, with recirculation means being provided between said feeder and discharge means so as to recirculate said buoyant bodies.

15. Device according to any of Claims 11 to 14, **characterized** in that structural elements (2, 9, 11, 14, 17) in flow contact with said fluid system (1) present a double-walled configuration and are provided with feeder and/or discharge means for supply and/or removal of substances.

16. Device according to any of Claims 11 to 15, **characterized** in that said cascade of compartments (2) is preceded by a mixing and/or reactor means for supplying and/or producing the substance creating said circulating flow (10) (Figure 8).

17. Device according to any of Claims 11 to 16, **characterized** in that several cascades (2) of compartments are combined so as to be configured as a single cascade unit (Figure 9).

18. Device according to Claim 17, **characterized** in that the individual cascades of compartments (2) are disposed in concentric relationship so as to surround one another.

19. Device according to Claim 17 or 18, **characterized** in that said cascade unit is provided with an outside wall absorbing the combined pressure of said fluid systems (1) contained in the individual cascades (2) of compartments, whilst the partitionings disposed in the interior of said cascade unit, which are shared by adjacent cascades of compartments (2), are less resistant to pressure than said outside wall.

## Revendications

1. Procédé pour transmission de matière et/ou d'énergie ou réalisation de réactions (bio)chimiques dans des systèmes gaz-liquide, par lequel le système fluide hétérogène passe par des chambres disposées en succession, en sens de courant, et superposées en forme d'une cascade en tour, lesdites chambres étant séparées par des surfaces déflectrices de courant, **caractérisé** en ce que dans les chambres des circulations de courant internes (10) du système fluide hétérogène (1) sont produites par du gaz (8) qui en raison de sa force ascensionnelle monte dans le liquide dans des sections desdites chambres, et en ce que toutes les phases traversant la cascade sont alimentées aux chambres contiguës par au moins une ouverture de passage de courant (12), ces ouvertures de passage de courant étant pourvues dans la zone supérieure la plus haute desdites surfaces déflectrices de courant.

2. Procédé selon la Revendication 1, **caractérisé** en ce que le gaz produisant les circulations de courant internes (10) est admis par le fond dans la cascade à chambres (2).

3. Procédé selon la Revendication 1, **caractérisé** en ce que le gaz produisant les circulations de courant internes (10) est produit comme produit de réaction dans lesdites chambres (3).

4. Procédé selon une quelconque des Revendications 1 à 4,

caractérisé en ce que le gaz produisant les circulations de courant internes (10) est passé, au moins en partie, en circulation à travers la cascade à chambres (2) ou un partie de celle-ci.

5. Procédé selon une quelconque des Revendications 1 à 4,
caractérisé en ce que le gaz produisant les circulations de courant internes (10) contient une matière chimiquement ou biochimiquement réactive avec ledit système fluide (1).

6. Procédé selon une quelconque des Revendications 1 à 6,
caractérisé en ce que des matières coalescentes ou agglomérées sont redispersées dans ledit système fluide (1).

7. Procédé selon une quelconque des Revendications 1 à 6,
caractérisé en ce que dans la cascade à chambres (2), dû aux moyens installés, de préférence des moyens déflecteurs de courant, des matières favorables au procédé sont admises et/ou des matières inhibitant le procédé sont évacuées, et/ou des catalysateurs biologiques ou chimiques sont fixés et/ou de la chaleur supplémentaire est ajoutée au ou retirée du système (1).

8. Procédé selon une quelconque des Revendications 1 à 7,
caractérisé en ce que le gaz produisant les circulations de courant internes (10) est produit, au moins en partie, au cours d'une opération précédente et est admis à la chambre inférieure la plus basse de ladite cascade.

9. Procédé selon une quelconque des Revendications 1 à 8,
caractérisé en ce qu'au moyen des circulations de courant dans lesdites chambres (3) des couches tourbillonnaires sont produites de particules qui sont utilisées comme catalysateurs, partenaires de réaction ou porteurs pour le fixage des catalysateurs chimiques ou biologiques, lesdites particules étant laissées passer à travers ladite cascade à chambres (2) ou étant retenues dans lesdites chambres pour être échangées.

10. Procédé selon une quelconque des Revendications 1 à 9,
caractérisé en ce que ledit gaz produisant lesdites circulations de courant internes (10) et montant dans des sections desdites chambres (3) est dirigé au moyen des surfaces déflectrices de courant supplémentaires (14).

11. Dispositif pour la réalisation du procédé selon une quelconque des Revendications 1 à 10,
caractérisé en ce que dans une cascade en tour (2) des surfaces déflectrices de courant (9) planes, en arc ou à la forme d'une enveloppe conique sont disposée et définissent lesdites chambres (3) en haut, celles-ci présentent au moins une ouverture de passage de courant (12) pour ledit gaz et toutes les autres matières dans leur zone supérieure la plus haute et contiguë aux chambres adjacentes, et en ce que lesdites ouverture de passage de courant (12) des surfaces déflectrices de courant (9) superposées sont alignées et/ou décalées l'une par rapport à l'autre.

12. Dispositif selon une quelconque des Revendications 1 à 11,
caractérisé en ce que des surfaces déflectrices de courant supplémentaires (14, 17) sont pourvues à l'intérieur desdites chambres (3).

13. Dispositif selon la Revendication 11 ou 12,
caractérisé en ce que des cribles, des plaques perforées ou des gicleurs (18) sont pourvus dans les ouvertures de passage de courant (12).

14. Dispositif selon une quelconque des Revendications 11 à 13,
caractérisé en ce que des éléments flotteurs sont pourvus en tant que matière pour produire la circulation du courant (10), et en ce qu'en bas de ladite cascade à chambres (2) des moyens d'alimentation et en haut de ladite cascade des moyens d'évacuation sont pourvus pour lesdits éléments flotteurs, entre lesdits moyens des moyens de recirculation étant pourvu pour la remise en circulation desdits élément flotteurs.

15. Dispositif selon une quelconque des Revendications 11 à 14,
caractérisé en ce que des élément de construction (2, 9, 11, 14, 17) se trouvant en contact avec le système fluide (1) sont à double paroi et munis d'un moyen d'alimentation et/ou d'évacuation pour des matières.

16. Dispositif selon une quelconque des Revendications 11 à 15,
caractérisé en ce que ladite cascade à chambres (2) est précédée par un moyen mélangeur et/ou réacteur pour l'alimentation et/ou production de la matière provoquant la circulation de courant (10) (figure 8).

17. Dispositif selon une quelconque des Revendications 11 à 16,
caractérisé en ce qu'une pluralité des cascades à chambres (2) est combinée par structure en une unité de cascades (figure 9).

18. Dispositif selon la Revendication 7,
caractérisé en ce que lesdites cascades à chambres (2) respectives sont disposées de manière concentrique l'une autour de l'autre.

19. Dispositif selon la Revendication 17 ou 18,
caractérisé en ce que l'unité en bloc de cascades est munie d'une cloison extérieure absorbante la pression commune dudit système fluide (1) dans les cascades à chambres (2) avoisinantes pendant que les parois qui se trouvent à l'intérieur de ladite unité de cascades (2) sont moins résistantes à la pression que la cloison extérieure.

# FIG.1a

# FIG.1b

# FIG.1c

# FIG.1d

FIG. 1 : Häufigkeitsfunktion H (τ) der Grenzfälle für kontinuierlichen Betrieb
a. idealer Rührkesselreaktor (RKR)
b. idealer Rohrreaktor (RR)

# FIG. 2b

FIG. 2a

EP 0 207 113 B1

FIG. 2: Häufigkeitsfunktion H (τ) einer Rührkesselkaskade (RKK) mit n hintereinandergeschalteten idealen RKR für kontinuierlichen Betrieb

FIG.3:

Kaskade aus übereinander angeordneten Kammern, in denen durch einseitig aufsteigende leichte Phase (hier Gasstrom $\dot{V}_G$) Umlaufströmungen des heterogenen L-G-Systems erzeugt werden

| $\dot{V}_L$ | Liquidstrom | ω | Austritt |
| $\dot{V}_G$ | Gasstrom | ( ) | Gegenstrom der L-Phase |
| α | Eintritt | | |

FIG.4:

A  Häufigkeitsfunktion einer idealen 4-stufigen RKK
B  gemessene Häufigkeitsfunktion einer ausgeführten
4-stufigen Turmkaskade mit Gaslift-Antrieb

FIG.5.

Umlaufströmung in einer Kammer der ausgeführten
Turmkaskade mit Gaslift-Antrieb
helle Bereiche - Gasphase
dunkle Bereiche - Flüssigphase

FIG. 6 ᴈ    FIG. 6 ᵇ

FIG.6:

Turmkaskaden mit unterschiedlicher Kammeranordnung bei
Gaslift-Antrieb der Umlaufströmungen in den Kammern

a.

b.

FIG.7

Turmkaskaden mit zusätzlichen Leitflächen
Leitrohren    für die Umlaufströmung in den Kammern

# FIG.8:

Kombination einer Turmkaskade entsprechend FiG. 6
mit einem darunter angeordnetem Schlaufenapparat

**FiG.9:**

Vergrößerung (Scale up) von Turmkaskaden durch
Anordnung umeinander